# EUROPEAN PATENT APPLICATION

(11) **EP 2 925 064 A1**
(43) Date of publication of application: **30.09.2015**
(21) Application number: 15167168.2
(22) Date of filing: 11.01.2013
(51) Int. Cl.: H04W 64/00

(54) **METHOD AND APPARATUS FOR LOCATING A MOBILE DEVICE USING THE MOBILE DEVICE ORIENTATION**

(30) Priority: 31.01.2012 US 201213363132
(62) Divisional of application: 13700610.2
(71) Applicant: Qualcomm Incorporated, San Diego, CA 92121-1714 (US)
(72) Inventor: Poduri, Sameera, San Diego, CA 92121 / US (US); Pakzad, Payam, San Diego, CA 92121 / US (US); Sridhara, Vinay, San Diego, CA 92121 / US (US)
(74) Representative: Dunlop, Hugh Christopher

(57) **Abstract**

Techniques for estimating the heading of a mobile wireless device are provided. The techniques include a method for estimating the heading of a mobile wireless device that includes receiving an estimated position for the mobile wireless device, receiving signal characteristics of a signal received from the mobile wireless device at a wireless access point of a Wireless Local Area Network (WLAN), determining an orientation of the mobile wireless device based on the estimated position of the mobile wireless device and the received signal characteristics, and determining a heading of the mobile wireless device based on the estimated position of the mobile wireless device and the orientation of the mobile wireless device.

## Description

### FIELD

The subject matter disclosed herein relates to electronic devices, and more particularly to methods, apparatuses and articles of manufacture to determine a position of a mobile device utilizing signals received at one or more wireless access points.

### BACKGROUND

The position of a mobile wireless device can be used to provide location-based services to users of the mobile wireless device. Some mobile wireless devices make use of signals from navigation satellite systems, such as the Global Positioning System (GPS), GLONASS, or Galileo systems, to determine the position of the mobile wireless device. The position of mobile wireless devices can also be determined based on the distance of the mobile wireless device from one or more base stations and/or other mobile wireless devices at known positions. Some mobile wireless devices include wireless receivers that allow them to communicate with Wi-Fi access points. The location of the mobile wireless device can be determined based on the location of the mobile wireless device relative to these wireless access points.

### SUMMARY

An example of a method for determining the position of a mobile wireless device according to the disclosure is provided. The method includes receiving signal characteristics of a signal received from the mobile wireless device at a wireless access point of a Wireless Local Area Network (WLAN), determining an orientation of the mobile wireless device relative to the wireless access point, determining a compensation factor based on the orientation of the mobile wireless device relative to the wireless access point, and determining an estimated position of the mobile wireless device based at least in part on the compensation factor. The compensation factor compensates for the effect of user occlusion on at least one characteristic of the signal received from the mobile wireless device.

Implementations of such a method may include one or more of the following features. Determining the compensation factor using map data that represents a layout of a building in which the wireless access point is located. Determining the estimated position of the mobile wireless device based at least in part on the compensation factor and map data that represents a layout of a building in which the wireless access point is located. Determining the orientation of the mobile wireless device further includes: sending a position request to the mobile wireless device in which the mobile wireless device is instructed to capture an image of an area surrounding the mobile wireless device, receiving an image of the area surrounding the mobile wireless device, identifying landmarks in the image received from the mobile wireless device, and determining an orientation of the mobile wireless device based on landmarks in the image captured by the mobile wireless device. Determining the orientation of the mobile wireless device includes: receiving data representing the orientation of the mobile wireless device based on sensor data collected by the mobile wireless device, and determining the orientation of the mobile wireless device using the information received from the inertial sensor. The sensor data comprises sensor data collected from an inertial sensor. The sensor data comprises sensor data collected from a magnetometer. Determining the orientation of the mobile wireless device relative to the wireless access point further includes: determining a heading of the mobile wireless device, and determining an orientation of the mobile wireless device based on the heading. Deriving a set of compensation values based on an expected extent of occlusion to be experienced by the mobile wireless device at a plurality of positions on the map, and determining an estimated position of the mobile wireless device based at least in part on the compensation factor and map data further includes comparing the compensation factor to the map data to determine an estimated location of the mobile wireless device. The compensation factor is associated with a Received Signal Strength Indication (RSSI) value associated a signal transmitted between the mobile wireless device and the wireless access point. Determining the estimated position of the mobile wireless device includes determining a compensated RSSI value for the mobile wireless device based on an RSSI value associated with the signal received from the mobile wireless device and the compensation factor. Determining the estimated position of the mobile wireless device includes determining the estimated position of the mobile wireless device by comparing the compensated RSSI value with estimated RSSI values associated for the wireless access point derived from the map data. The compensation factor is associated with a round-trip time (RTT) value associated a signal transmitted between the mobile wireless device and the wireless access point. Determining the estimated position of the mobile wireless device includes determining a compensated RTT value for the mobile wireless device based on an RTT value associated with the signal received from the mobile wireless device and the compensation factor. Determining the estimated position of the mobile wireless device include determining the estimated position of the mobile wireless device by comparing the compensated RTT value with estimated RTT values associated for the wireless access point derived from the map data. Determining a heading of the mobile wireless device includes determining the heading using an estimated position of the mobile wireless device and a direction of motion of the mobile wireless device. Determining the heading of the mobile wireless device includes determining the heading of the mobile wireless device using a trajectory estimation filter configured to track an estimate of the direction of motion of the mobile wireless device. The trajectory estimation filter is a particle filter. The trajectory estimation filter is a Kalman filter.

An example of a tangible computer-readable medium having stored thereon computer-readable instructions for determining the position of a mobile wireless device according to the disclosure is provided. The medium includes instructions configured to cause a computer to: receive signal characteristics of a signal received from the mobile wireless device at a wireless access point of a Wireless Local Area Network (WLAN), determine an orientation of the mobile wireless device relative to the wireless access point, determine a compensation factor based on the orientation of the mobile wireless device relative to the wireless access point, the compensation factor compensating for the effect of user occlusion on at least one characteristic of the signal received from the mobile wireless device, and determine an estimated position of the mobile wireless device based at least in part on the compensation factor.

Implementations of such a medium may include one or more of the following features. The instructions that cause the computer to determine the compensation factor include instructions that cause the computer to determine the compensation factor using map data that represents a layout of a building in which the wireless access point is located. The instructions that cause the computer to determine the estimated position of the mobile wireless device includes instructions that cause the computer to determine the estimated position of the mobile wireless device based at least in part on the compensation factor and map data that represents a layout of a building in which the wireless access point is located. The instructions that cause the computer to determine the orientation of the mobile wireless device further comprise instructions that cause a computer to: send a position request to the mobile wireless device in which the mobile wireless device is instructed to capture an image of an area surrounding the mobile wireless device, receive an image of the area surrounding the mobile wireless device, identify landmarks in the image received from the mobile wireless device, and determine an orientation of the mobile wireless device based on landmarks in the image captured by the mobile wireless device. The instructions that cause the computer to determine the orientation of the mobile wireless device include instructions that cause a computer to: receive data representing the orientation of the mobile wireless device based on sensor data collected by the mobile wireless device, and determine the orientation of the mobile wireless device using the information received from the inertial sensor. The sensor data comprises sensor data collected from an inertial sensor. The sensor data includes sensor data collected from a magnetometer. The instructions that cause the computer to determine the orientation of the mobile wireless device relative to the wireless access point include instructions that cause a computer to: determine a heading of the mobile wireless device, and determine an orientation of the mobile wireless device based on the heading. Instructions to cause a computer to derive a set of compensation values based on an expected extent of occlusion to be experienced by the mobile wireless device at a plurality of positions on the map, and the instructions that cause the computer to determine an estimated position of the mobile wireless device based at least in part on the compensation factor and map data further comprises instructions that cause the computer to compare the compensation factor to the map data to determine an estimated location of the mobile wireless device. The compensation factor is associated with a Received Signal Strength Indication (RSSI) value associated a signal transmitted between the mobile wireless device and the wireless access point. The instructions that cause the computer to determine the estimated position of the mobile wireless device include instructions that cause the computer to determine a compensated RSSI value for the mobile wireless device based on an RSSI value associated with the signal received from the mobile wireless device and the compensation factor. The instructions that cause the computer to determine the estimated position of the mobile wireless device include instructions that cause the computer to determine the estimated position of the mobile wireless device by comparing the compensated RSSI value with estimated RSSI values associated for the wireless access point derived from the map data. The compensation factor is associated with a round-trip time (RTT) value associated a signal transmitted between the mobile wireless device and the wireless access point. The instructions that cause the computer to determine the estimated position of the mobile wireless device includes instructions that cause the computer to determine a compensated RTT value for the mobile wireless device based on an RTT value associated with the signal received from the mobile wireless device and the compensation factor. The instructions that cause the computer to determine the estimated position of the mobile wireless device include instructions that cause the computer to determine the estimated position of the mobile wireless device by comparing the compensated RTT value with estimated RTT values associated for the wireless access point derived from the map data. The instructions that cause the computer to determine a heading of the mobile wireless device include instructions that cause the computer to determine the heading using an estimated position of the mobile wireless device and a direction of motion of the mobile wireless device. The instructions that cause the computer to determine the heading of the mobile wireless device include instructions that cause the computer to determine the heading of the mobile wireless device using a trajectory estimation filter configured to track an estimate of the direction of motion of the mobile wireless device. The trajectory estimation filter is a particle filter. The trajectory estimation filter is a Kalman filter.

An example of an apparatus for determining the position of a mobile wireless device according to the disclosure is provided. The apparatus includes means for receiving signal characteristics of a signal received from the mobile wireless device at a wireless access point of a Wireless Local Area Network (WLAN), means for determining an orientation of the mobile wireless device relative to the wireless access point, means for determining a compensation factor based on the orientation of the mobile wireless device relative to the wireless access point, and means for determining an estimated position of the mobile wireless device based at least in part on the compensation factor. The compensation factor compensates for the effect of user occlusion on at least one characteristic of the signal received from the mobile wireless device.

Implementations of such an apparatus may include one or more of the following features. The means for determining the compensation factor includes means for determining the compensation factor using map data that represents a layout of a building in which the wireless access point is located. The means for determining the estimated position of the mobile wireless device includes means for determining the estimated position of the mobile wireless device based at least in part on the compensation factor and map data that represents a layout of a building in which the wireless access point is located. The means for determining the orientation of the mobile wireless device includes: means for sending a position request to the mobile wireless device in which the mobile wireless device is instructed to capture an image of an area surrounding the mobile wireless device, means for receiving an image of the area surrounding the mobile wireless device, means for identifying landmarks in the image received from the mobile wireless device, and means for determining an orientation of the mobile wireless device based on landmarks in the image captured by the mobile wireless device. The means for determining the orientation of the mobile wireless device includes: means for receiving data representing the orientation of the mobile wireless device based on sensor data collected by the mobile wireless device, and determining the orientation of the mobile wireless device using the information received from the inertial sensor. The sensor data comprises sensor data collected from an inertial sensor. The sensor data comprises sensor data collected from a magnetometer. The means for determining the orientation of the mobile wireless device relative to the wireless access point includes: means for determining a heading of the mobile wireless device, and means for determining an orientation of the mobile wireless device based on the heading. Means for deriving a set of compensation values based on an expected extent of occlusion to be experienced by the mobile wireless device at a plurality of positions on the map, and the means for determining an estimated position of the mobile wireless device based at least in part on the compensation factor and map data includes means for comparing the compensation factor to the map data to determine an estimated location of the mobile wireless device. The compensation factor is associated with a Received Signal Strength Indication (RSSI) value associated a signal transmitted between the mobile wireless device and the wireless access point. The means for determining the estimated position of the mobile wireless device include means for determining a compensated RSSI value for the mobile wireless device based on an RSSI value associated with the signal received from the mobile wireless device and the compensation factor. The means for determining the estimated position of the mobile wireless device include means for determining the estimated position of the mobile wireless device by comparing the compensated RSSI value with estimated RSSI values associated for the wireless access point derived from the map data. The compensation factor is associated with a round-trip time (RTT) value associated a signal transmitted between the mobile wireless device and the wireless access point. The means for determining the estimated position of the mobile wireless device includes means for determining a compensated RTT value for the mobile wireless device based on an RTT value associated with the signal received from the mobile wireless device and the compensation factor. The means for determining the estimated position of the mobile wireless device include means for determining the estimated position of the mobile wireless device by comparing the compensated RTT value with estimated RTT values associated for the wireless access point derived from the map data. The means for determining a heading of the mobile wireless device includes means for determining the heading using an estimated position of the mobile wireless device and a direction of motion of the mobile wireless device. The means for determining the heading of the mobile wireless device includes means for determining the heading of the mobile wireless device using a trajectory estimation filter configured to track an estimate of the direction of motion of the mobile wireless device. The trajectory estimation filter is a particle filter. The trajectory estimation filter is a Kalman filter.

An example of an apparatus for determining the position of a mobile wireless device according to the disclosure is provided. The apparatus includes a tangible, non-transitory computer-readable memory, a plurality of modules comprising processor executable code stored in the memory, a processor connected to the memory and configured to access the plurality of modules stored in the memory, and a position determination module configured to receive signal characteristics of a signal received from the mobile wireless device at a wireless access point of a Wireless Local Area Network (WLAN), determine an orientation of the mobile wireless device relative to the wireless access point, determine a compensation factor based on the orientation of the mobile wireless device relative to the wireless access point, and determine an estimated position of the mobile wireless device based at least in part on the compensation factor. The compensation factor compensates for the effect of user occlusion on at least one characteristic of the signal received from the mobile wireless device.

Implementations of such an apparatus may include one or more of the following features. The position determination module is configured to determine the compensation factor using map data that represents a layout of a building in which the wireless access point is located. The position determination module is configured to determine the estimated position of the mobile wireless device based at least in part on the compensation factor and map data that represents a layout of a building in which the wireless access point is located. The position determination module is configured to: send a position request to the mobile wireless device in which the mobile wireless device is instructed to capture an image of an area surrounding the mobile wireless device, receive an image of the area surrounding the mobile wireless device, identify landmarks in the image received from the mobile wireless device, and determine an orientation of the mobile wireless device based on landmarks in the image captured by the mobile wireless device. The position determination module is configured to: receive data representing the orientation of the mobile wireless device based on sensor data collected by the mobile wireless device, and determine the orientation of the mobile wireless device using the information received from the inertial sensor. The sensor data comprises sensor data collected from an inertial sensor. The sensor data comprises sensor data collected from a magnetometer. The position determination module is configured to: determine a heading of the mobile wireless device, and determine an orientation of the mobile wireless device based on the heading. The position determination module is configured to: derive a set of compensation values based on an expected extent of occlusion to be experienced by the mobile wireless device at a plurality of positions on the map, and wherein the position determination module being configured to determine an estimated position of the mobile wireless device based at least in part on the compensation factor and map data further is further configured to compare the compensation factor to the map data to determine an estimated location of the mobile wireless device. The compensation factor is associated with a Received Signal Strength Indication (RSSI) value associated a signal transmitted between the mobile wireless device and the wireless access point. The position determination module being configured to determine the estimated position of the mobile wireless device is further configured to determine a compensated RSSI value for the mobile wireless device based on an RSSI value associated with the signal received from the mobile wireless device and the compensation factor. The position determination module is further configured to determine the estimated position of the mobile wireless device by comparing the compensated RSSI value with estimated RSSI values associated for the wireless access point derived from the map data. The compensation factor is associated with a round-trip time (RTT) value associated a signal transmitted between the mobile wireless device and the wireless access point. The position determination module being configured to determine the estimated position of the mobile wireless device is further configured to determine a compensated RTT value for the mobile wireless device based on an RTT value associated with the signal received from the mobile wireless device and the compensation factor. The position determination module being configured to determine the estimated position of the mobile wireless device is further configured to determine the estimated position of the mobile wireless device by comparing the compensated RTT value with estimated RTT values associated for the wireless access point derived from the map data. The position determination module is configured to determine the heading using an estimated position of the mobile wireless device and a direction of motion of the mobile wireless device. The position determination module is configured to determine the heading of the mobile wireless device using a trajectory estimation filter configured to track an estimate of the direction of motion of the mobile wireless device. The trajectory estimation filter is a particle filter. The trajectory estimation filter is a Kalman filter.

An example of a method for estimating the heading of a mobile wireless device according to the disclosure is provided. The method includes receiving an estimated position for a mobile wireless device, receiving signal characteristics of a signal received from the mobile wireless device at a wireless access point of a Wireless Local Area Network (WLAN), determining an orientation of the mobile wireless device based on the estimated position of the mobile wireless device and the signal characteristics, and determining a heading of the mobile wireless device based on the estimated position of the device and the orientation of the mobile wireless device.

Implementations of such a method may include one or more of the following features. Determining the orientation of the mobile wireless device based on the estimated position of the mobile wireless device and the signal characteristics includes determining the orientation of the mobile wireless device based at least in part on a Received Signal Strength Indication (RSSI) value associated a signal transmitted between the mobile wireless device and the wireless access point. Determining the orientation of the mobile wireless device based on the estimated position of the mobile wireless device and the signal characteristics includes determining the orientation of the mobile wireless device based at least in part on a round-trip time (RTT) value associated a signal transmitted between the mobile wireless device and the wireless access point. Determining the orientation of the mobile wireless device based on the estimated position of the mobile wireless device and the signal characteristics includes comparing the signal characteristics and the estimated position of the mobile wireless device to data mapping signal characteristics associated with positions and orientations in the building to derive the estimated orientation of the mobile wireless device.

An example of an apparatus for estimating the heading of a mobile wireless device according to the disclosure is provided. The apparatus includes means for receiving an estimated position for a mobile wireless device, means for receiving signal characteristics of a signal received from the mobile wireless device at a wireless access point of a Wireless Local Area Network (WLAN), means for determining an orientation of the mobile wireless device based on the estimated position of the mobile wireless device and the signal characteristics, and means for determining a heading of the mobile wireless device based on the estimated position of the device and the orientation of the mobile wireless device.

Implementations of such an apparatus may include one or more of the following features. The means for determining the orientation of the mobile wireless device based on the estimated position of the mobile wireless device and the signal characteristics includes means for determining the orientation of the mobile wireless device based at least in part on a Received Signal Strength Indication (RSSI) value associated a signal transmitted between the mobile wireless device and the wireless access point. The means for determining the orientation of the mobile wireless device based on the estimated position of the mobile wireless device and the signal characteristics includes means for determining the orientation of the mobile wireless device based at least in part on a round-trip time (RTT) value associated a signal transmitted between the mobile wireless device and the wireless access point. The means for determining the orientation of the mobile wireless device based on the estimated position of the mobile wireless device and the signal characteristics includes means for comparing the signal characteristics and the estimated position of the mobile wireless device to data mapping signal characteristics associated with positions and orientations in the building to derive the estimated orientation of the mobile wireless device.

An example of an apparatus for estimating the heading of a mobile wireless device according to the disclosure is provided. The apparatus includes a tangible, non-transitory computer-readable memory, a plurality of modules comprising processor executable code stored in the memory, a processor connected to the memory and configured to access the plurality of modules stored in the memory, and a position determination module. The position determination module is configured to receive an estimated position for a mobile wireless device, receive signal characteristics of a signal received from the mobile wireless device at a wireless access point of a Wireless Local Area Network (WLAN), determine an orientation of the mobile wireless device based on the estimated position of the mobile wireless device and the signal characteristics, and determine a heading of the mobile wireless device based on the estimated position of the device and the orientation of the mobile wireless device.

Implementations of such an apparatus may include one or more of the following features.

The position determination module being configured to determine the orientation of the mobile wireless device based on the estimated position of the mobile wireless device and the signal characteristics is configured to determine the orientation of the mobile wireless device based at least in part on a Received Signal Strength Indication (RSSI) value associated a signal transmitted between the mobile wireless device and the wireless access point. The position determination module being configured to determine the orientation of the mobile wireless device based on the estimated position of the mobile wireless device and the signal characteristics is configured to determine the orientation of the mobile wireless device based at least in part on a round-trip time (RTT) value associated a signal transmitted between the mobile wireless device and the wireless access point. The position determination module being configured to determine the orientation of the mobile wireless device based on the estimated position of the mobile wireless device and the signal characteristics is configured to compare the signal characteristics and the estimated position of the mobile wireless device to data mapping signal characteristics associated with positions and orientations in the building to derive the estimated orientation of the mobile wireless device.

An example of a tangible computer-readable medium having stored thereon computer-readable instructions for instructions estimating the heading of a mobile wireless device according to the disclosure is provided. The medium includes instructions configured to cause the computer to receive an estimated position for a mobile wireless device, receive signal characteristics of a signal received from the mobile wireless device at a wireless access point of a Wireless Local Area Network (WLAN), determine an orientation of the mobile wireless device based on the estimated position of the mobile wireless device and the signal characteristics, and determine a heading of the mobile wireless device based on the estimated position of the device and the orientation of the mobile wireless device.

Implementations of such a medium may include one or more of the following features. The code configured to cause the computer to determine the orientation of the mobile wireless device based on the estimated position of the mobile wireless device and the signal characteristics includes code configured to cause the computer to determine the orientation of the mobile wireless device based at least in part on a Received Signal Strength Indication (RSSI) value associated a signal transmitted between the mobile wireless device and the wireless access point. The code configured to cause the computer to determine the orientation of the mobile wireless device based on the estimated position of the mobile wireless device and the signal characteristics includes code configured to cause the computer to determine the orientation of the mobile wireless device based at least in part on a round-trip time (RTT) value associated a signal transmitted between the mobile wireless device and the wireless access point. The code configured to cause the computer to determine the orientation of the mobile wireless device based on the estimated position of the mobile wireless device and the signal characteristics includes code configured to cause the computer to compare the signal characteristics and the estimated position of the mobile wireless device to data mapping signal characteristics associated with positions and orientations in the building to derive the estimated orientation of the mobile wireless device.

### BRIEF DESCRIPTION OF THE DRAWINGS

Fig. 1 is a diagram illustrating orientation-dependent user occlusion of signals transmitted between a wireless access points and a mobile wireless device.
Figs. 2A, 2B, and 2C are plan views of a building map with indications of Received Signal Strength Indication (RSSI) measurements.
Fig. 3 is a portion of a plan view of a building map illustrating a series of RSSI measurements overlaid over a portion of the map of a building in which a wireless access point is installed.
Fig. 4 is a partial block diagram of a wireless communication system.
Fig. 5 is a block diagram of a position determination server of Fig. 4.
Fig. 6 is a block diagram of a mobile wireless device of Fig. 4.
Fig. 7 is a flow diagram of a method for determining a position of a mobile wireless device.
Fig. 8 is a flow diagram of a method for determining an estimated heading of a mobile wireless device.

### DETAILED DESCRIPTION

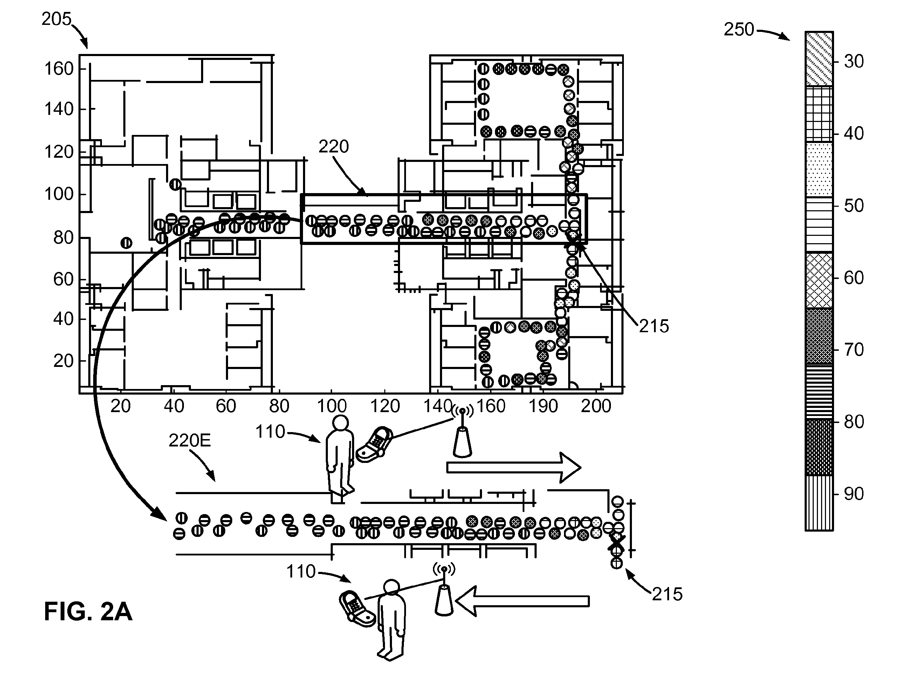

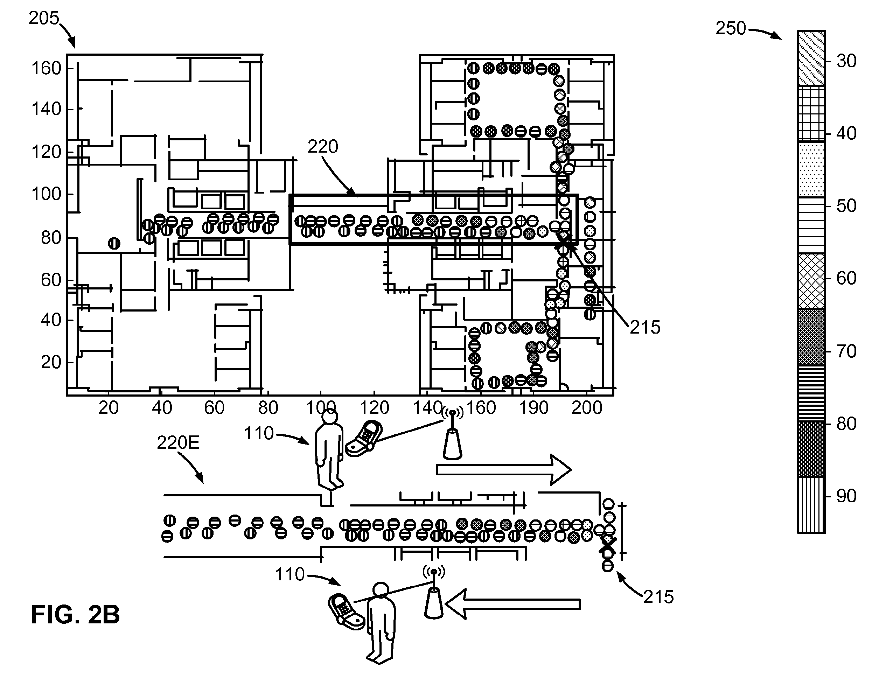

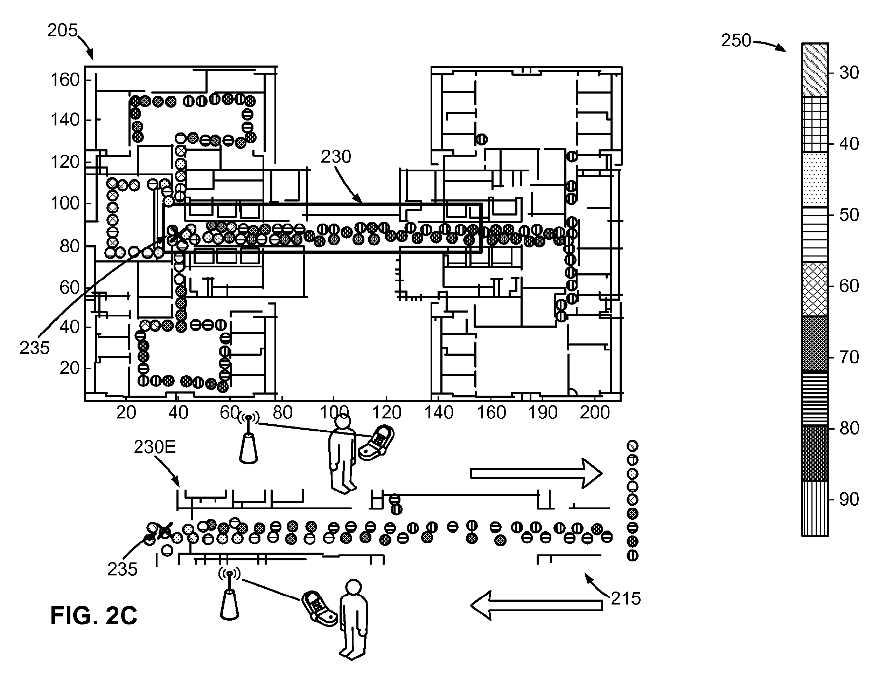

Techniques for compensating for user occlusion in Wi-Fi positioning are provided. Whether a user's mobile wireless device is occluded with respect to a Wi-Fi access point affects the signal at the mobile wireless device. Significant drops in Received Signal Strength Indication (RSSI) can occur when the user occludes the signal between the wireless access point and mobile wireless device. For example, drops in RSSI of up to 10 db have been observed due to user occlusion. Examples of this effect are illustrated in Figs. 2A, 2B, and 2C, which are described in detail below. The orientation of the mobile wireless device relative to a wireless access point is indicative of whether a user is likely to be occluding the mobile wireless device with respect to that access point for wireless communication.

The round-trip time (RTT) for signals traveling between the wireless access point and the mobile wireless device can also be impacted by user occlusion (the user occluding the mobile wireless device, e.g., relative to the wireless access point). RTT is the amount of time that it takes for a signal sent by the mobile wireless device to travel from the mobile wireless device to a wireless access point and for an acknowledgement sent by the wireless access point to travel from the wireless access point to the mobile wireless device. Alternatively, RTT is the amount of time that it takes for a signal sent by the wireless access point to travel from the wireless access point to a mobile wireless device and for an acknowledgement sent by the mobile wireless device to travel from the mobile wireless device to the wireless access point. RTT data can be used to estimate the position of the mobile wireless device by estimating how far away the mobile wireless device is from the wireless access point. User occlusion can affect the transit times for the signals between the mobile wireless device and the wireless access point. Even a delay as long as a nanosecond can cause significant errors in the estimated position of the mobile wireless device derived from the RTT data.

Positioning engines in conventional wireless navigation systems do not take into account user orientation or user occlusion. As a result, the position estimates determined for a mobile wireless device can be inaccurate when user occlusion occurs. For example, positioning errors of up to 8 to 10 meters have been observed where the user of the mobile wireless device occluded the signal between the wireless access point and the mobile wireless device.

Techniques are provided to estimate and compensate for user occlusion to provide improved positioning accuracy. Techniques disclosed herein can compensate for dynamic occlusions relative to one or more access points inferred from the orientation of the device and information about locations of access points. In addition, map information that includes the positions of wireless access points can improve determination of the compensation factor, and consequently can improve positioning accuracy. The map information can be used to derive the expected extent of occlusion for each access point for when the mobile wireless device is located at various positions on the map. The map information can also be used in estimating the RSSI and/or the RTT for signals transmitted between the wireless access points and a mobile wireless device. The map information can also include information about the layout of a building in which the wireless access points are positioned. The map information can be used to determine where walls or other structures within the building may interfere with the signals of the wireless access points and the location of the walls or other structure can be used to improve the determination of the compensation factor and the position of the mobile wireless device.

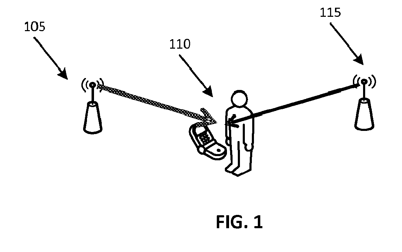

Fig. 1 illustrates an example of user occlusion where the body of a user 112 of a mobile wireless device 110 occludes signals transmitted between the mobile wireless device and a wireless access point 115. Fig. 1 illustrates how the position of the user 112 and the mobile wireless device 110 relative to the wireless access points 105, 115 can affect the quality of signals transmitted between the mobile wireless device 110 and the wireless access points 105, 115. In the example illustrated in Fig. 1, the user 112 is using the mobile wireless device 110 that can communicate with the wireless access points 105 and 115. The user is facing the wireless access point 105 and holding the mobile wireless device 110 in front of the user 112, such that the user's wireless device is oriented toward the wireless access point 115 and away from the wireless access point 105. The wireless signals transmitted between the mobile wireless device 110 and the wireless access point 105 are not occluded by the user's body, except possibly the user's hand. However, the wireless signals transmitted by the mobile wireless device 110 and the wireless access point 115 are occluded by the user's body. As a result, the RSSI of the signals transmitted between the mobile wireless device 110 and the wireless access point 115 can experience a decrease and/or the RTT for signals between the mobile wireless device 110 and the wireless access point 115 can significantly increase due to user occlusion. Other signal quality indicators can also be affected by the user occlusion.

Accounting for orientation of the mobile wireless device relative to a wireless access point orientation when predicting RSSI, RTT, or other signal quality indicators can further improve the positioning accuracy. Orientation of the mobile wireless device relative to a wireless access point can be used to infer user occlusion of signals transmitted between the wireless access point and the user's mobile wireless device. Systems and methods described herein compensate for dynamic occlusions of wireless signals inferred from the orientation of the mobile wireless device, or other means of detecting occlusion. One or more compensation factors can then be determined based on the position and orientation of the device with respect to a wireless access point. If the mobile wireless device is within range of multiple access points, one or more compensation factors can be determined for each of the wireless access points.

The compensation factor can be determined based on the orientation of the device and information about positions of one or more wireless access points with which the mobile wireless device is or has recently communicated. The map information can include the positions of wireless access points and may also include information about other objects near the wireless access points that can cause signal occlusion, such as walls or other structural elements, furniture, or other features in a building that can cause occlusion of wireless signals.

When determining a compensation factor to be used in determining the position of a wireless device, a floor map of the building in which the wireless access points are installed can be inspected to detect the possibility and extent of occlusion that might occur. For example, in corridors without multiple paths between the wireless access point and the mobile wireless device, the occlusion effects can be more severe due to user occlusion. The compensation performed is preferably independent of the type of underlying Wi-Fi model used. For example, the underlying model may be a simple ranging model, a heatmap, or other type of model.

Figs. 2A, 2B, and 2C illustrate the impact of user occlusion in an office building. In the examples illustrated in Figs. 2A, 2B, and 2C the user's trajectory, or path through the building with the mobile wireless device, is illustrated with a series of patterned dots. Key 250 maps the patterns of the dots to a range of RSSI values. Each of these dots represents a point along the path of the user of mobile wireless device 110 where RSSI was measured. The pattern of each of the dots represents the RSSI value measured at that location. In Fig. 2A, section 220 of a corridor of the building map 205 is enlarged and displayed below the building map 205 in enlarged map section 220E. Fig. 2B shows another view of the map illustrated in Fig. 2A with the large arrow removed.

In the example illustrated in Figs. 2A and 2B, a wireless access point 215 is located at one end of the corridor. A series of RSSI measurements were taken as the user moved along the corridor toward the wireless access point 215 and away from the wireless access point 215. In the example illustrated in Fig. 2C, a second wireless access point 235 is located at the opposite end of the corridor from wireless access point 215.

The example implementation illustrated in Figs. 2A, 2B, and 2C assumes that the user is holding the mobile wireless device 110 in front of the user. For example, in Figs. 2A and 2B, the user's body occludes the signals transmitted between the mobile wireless device and the wireless access point 215 as she moves away from the wireless access point 215. The user's body does not occlude the signals transmitted by the mobile wireless device 110 and the wireless access point 215 as she moves toward the wireless access point 215. The top set of patterned dots shown in enlarged map section 220E of the map represent the track of the user moving toward the wireless access point 215, while the lower set of dots represents the user moving away from the wireless access point 215. As can be seen in this figure, the RSSI values measured as the user moved toward the wireless access point 215 with the mobile wireless device 110 were higher than those where the user moved away from the wireless access point 215 with the mobile wireless device 110, because the body of user occluded the signals transmitted between the mobile wireless device 110 and the wireless access point 215 as she moved away from the wireless access point.

Fig. 2C illustrates another example of tracking the movement of the user through another portion of the corridor of the same building as illustrated in Figs. 2A and 2B. In Fig. 2C, the trajectory of user is once again illustrated as a series of patterned dots whose patterns represent RSSI values measured at the locations illustrated by the patterned dots. In Fig. 2C, section 230 of a corridor within the building map 205 is enlarged and displayed below the building map 205 in enlarged map section 230E to show additional detail. Fig. 2C illustrates the effect of user occlusion on the signal transmitted between the mobile wireless device and the wireless access point 235. The wireless access point 235 is located on the opposite end of the corridor as the wireless access point 215 illustrated in Figs. 2A and 2B. The top set of patterned dots shown in enlarged map section 230E of the map represent the track of the user moving away from the wireless access point 235, while the lower set of dots represents the user moving toward the wireless access point 235. As can be seen in this figure, the RSSI values measured as the user moved toward the wireless access point 235 were higher than those where the user moved away from the wireless access point 235, because the body of user occluded the signals transmitted between the mobile wireless device and the wireless access point 235 as she moved away from the wireless access point.

The example illustrated in Figs. 2A, 2B, and 2C assumes that the user is holding the mobile wireless device 110 in front of the user. In other implementations, the systems and methods disclosed herein can be configured to operate using a different assumption regarding the position of the user relative to the device. For example, in some situations, an assumption can be made that the user will hold the mobile wireless device to the user's ear or in some other position based on the type of usage of the device. For example, if a user is making a voice call, the techniques disclosed herein may make an assumption that the user is holding the mobile wireless device to the user's ear for the purposes of compensation for user occlusion when determining the position of the mobile wireless device.

The systems and methods disclosed herein make use of a positioning engine that can generate a probability distribution of the orientation of the mobile wireless device. Alternatively, or in combination with the positioning engine, sensors associated with the mobile wireless device can be used to determine an estimated orientation of the mobile wireless device relative to the wireless access point. When the user is moving, orientation can be derived from the current and previous positions of the user. The position engine can also be implemented to include the orientation as a part of the state being estimated.

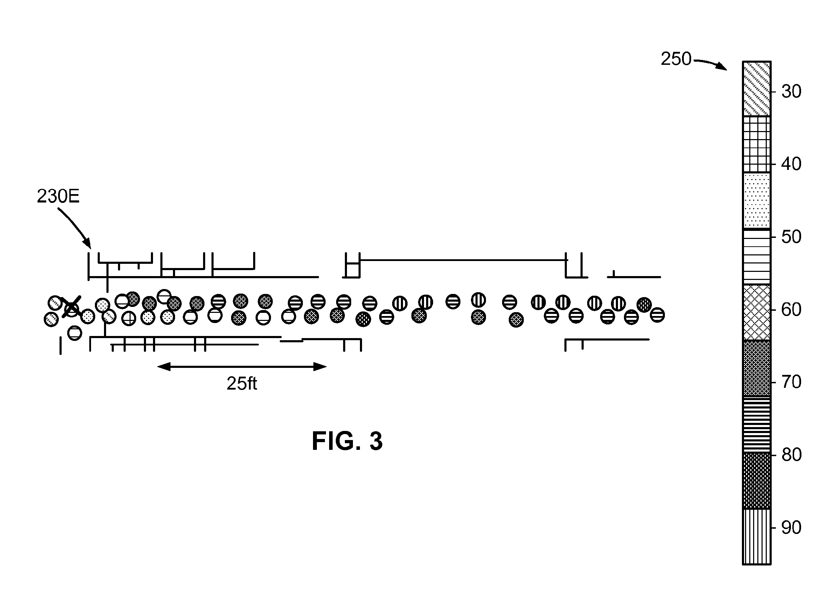

An occlusion compensation model can be used to compute the likelihood of a given RSSI measurement during the resampling step in the particle filter. Fig. 3 illustrates an example of similar RSSI readings occurring based on the orientation of the user relative to the wireless access point using the enlarged map section 230E illustrated in Fig. 2C. As can be seen in Fig. 3, the similar RSSI readings are represented by similarly patterned dots. In this example, an RSSI value of -55db corresponds to particles that are approximately 40 feet from a selected wireless access point when the mobile wireless device is in a first orientation relative to the wireless access point and the user is not occluding the signal between the mobile wireless device and the wireless access point. In contrast, an RSSI value of -55 dB may also correspond to particles that are approximately 15 feet from the selected wireless access point when the mobile wireless device is in a second orientation relative to the wireless access point and the user is occluding the signal between the mobile wireless device and the wireless access point. In this example, the user occlusion has resulted in a drop in RSSI values that could result in an erroneous position estimate as large as 25 feet.

The mobile wireless device 110 can also include one or more inertial sensors, such as accelerometers, gyroscopes, and/or magnetometers, and the orientation of the mobile wireless device can be determined based on the sensor data received from these sensors. The mobile wireless device 110 can also be configured to capture an image or images of the location surrounding the mobile wireless device, and these images can be analyzed to estimate the location and/or orientation of the mobile wireless device. As verified by actual measurements, the difference in occluded measurements can correspond to up to 8 to 10 meters in positioning errors. This effect is particularly pronounced in scenarios where the user is located in a line between access points, such as in the example illustrated in Figs. 2A, 2B, and 2C. Much more accurate position estimates can be determined for mobile wireless devices by compensating for user occlusions.

Based on the estimated orientation, one or more compensation factors can be determined that offsets probable user occlusion of the signals between the wireless access point and the mobile wireless device. The compensation factor(s) can then be used when determining an estimated location of the mobile wireless device. This can result in significant increases in the accuracy of the position estimates of the mobile wireless device. Furthermore, given an estimate of the user position and measurements of the Wi-Fi measurements, the orientation of the mobile wireless device can be derived from the known information.

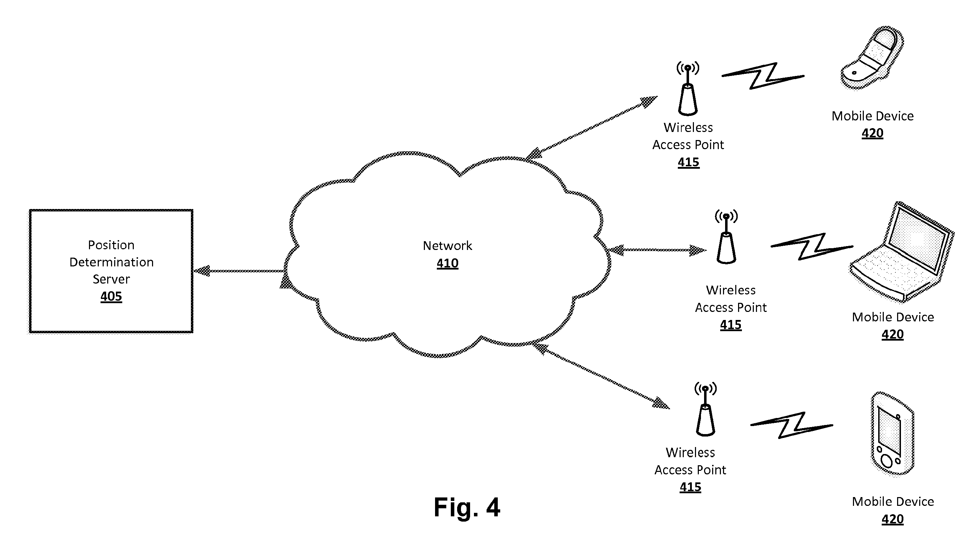

Fig. 4 is a block diagram of a wireless communication system 400 in which the various techniques disclosed herein can be implemented. The wireless communication system 400 includes a position determination server 405 and a plurality of wireless access points in communication with the position determination server 405 via network 410. Network 410 can comprise one or more wired or wireless networks. For example, the network 410 can comprise one or more public and/or private networks, and can be implemented, at least in part, on the Internet.

The wireless access points 415 provide wireless network access for one or more mobile wireless devices 420. The wireless access points 415 can provide data and/or voice connectivity for the plurality of mobile wireless devices 420. The wireless access points 415 can be configured implement various wireless communication standards for providing connectivity to the plurality of mobile wireless devices 420. For example, the wireless access points 415 can be configured to implement the IEEE 802.11 family of standards commonly referred to a Wi-Fi. The wireless access points 415 can be configured to implement other wireless communications standards in addition to or instead of Wi-Fi.

The mobile wireless devices 420 (like the mobile wireless device 110 described above) can comprise a mobile telephone, a handheld computer system, such as a tablet computer, PDA, or other similar device, a laptop computer system, or other device that includes a transmitter for transmitting data from the mobile wireless device to a wireless access point 415 and a receiver for receiving data from a wireless access point 415. The mobile wireless devices 420 can include a processor for executing instructions stored on a tangible computer-readable medium. The mobile wireless devices 420 can be configured to execute various software applications. These software applications can make use of the position of the mobile wireless device 420 to provide location-based services or information to users of the mobile wireless device 420.

The position determination server 405 can be used to determine a position of a mobile wireless device 420 by analyzing signal characteristics of signals received at one or more wireless access points 415 from the mobile wireless device 420. The position determination server 405 can estimate a distance that the mobile wireless device 420 is from a particular wireless access point 415 based on characteristics of signals received from the mobile wireless device 420. For example, the position determination server 405 can determine an estimated distance that the mobile wireless device 420 is from a particular wireless access point 415 based on RSSI of signals received from the mobile wireless device 420 at the wireless access point 415 and/or based on the RTT of a signal transmitted from the wireless access point 415 to the mobile wireless device 420 and back from the mobile wireless device 420 to the wireless access point 415. The position determination server 405 can use other signal characteristics to estimate the distance that the mobile wireless device 420 is from the wireless access point 415.

To further increase the accuracy of the position estimate, the position determination server 405 can use the signal characteristics associated with multiple wireless access points 415 to further improve the accuracy of the position estimate determined for the mobile wireless device 420. Furthermore, the position determination server 405 can use a map information of a building in which the wireless access points 415 are deployed to further improve the accuracy of the position estimate. The map information can provide information about walls, fixtures, and other elements of the building that can either fully or partially occlude signals between a mobile wireless device 420 and a wireless access point 415. The map information can be used to narrow down the locations where a mobile wireless device can be located within a building to locations where it is actually possible for a user of the device to be present. For example, the map information can be used to identify where rooms and corridors within a building are located and the position determination server can correlate this information with the signal characteristic information received from one or more wireless access points 415 to help estimate the position of a mobile wireless device 420 within the building.

The map information can include information identifying the positions of wireless access points. The map information can also include information identifying the location of walls, structures, or other obstructions in a building that may interfere with the signals of the wireless access points. The map information can be used to identify areas where user occlusion of a signal may be particularly severe. For example, in corridors, such as those illustrated in Figs. 2A-2C and 3, where there are not multiple paths for signals to traverse between a wireless access point 415 and the mobile wireless device 420, the effect of user occlusion can be more severe than in other locations where multiple paths exist between the wireless access point 415 and the mobile wireless device 420.

The position determination server 405 can also determine a compensation factor to compensate for user occlusion of signals between a mobile wireless device 420 and a wireless access point 415. As described above, user occlusion of the signals between the mobile wireless device 420 and the wireless access point can result in significant errors in estimating the position of the mobile wireless device 420. The position determination server 405 can be configured to track the orientation of the mobile wireless device 420 as a user moves the mobile wireless device relative to the position of the wireless access points 415 and to dynamically determine a compensation factor to apply to signal characteristics information received from the wireless access points 415 when estimating the position of the mobile wireless device 420. The position determination server 405 can be configured to receive orientation information from the mobile wireless device 420. The mobile wireless device 420 can include one or more inertial sensors, such as accelerometers, gyroscopes, and/or magnetometers, and the orientation of the mobile wireless device can be determined based on the sensor data received from these sensors. The mobile wireless device can also be configured to capture an image or images of the location surrounding the mobile wireless device, and these images can be analyzed to estimate the location and/or orientation of the mobile wireless device. The mobile wireless device can be configured to analyze the orientation provided by the sensors and send the analyzed information to the position determination server 405 or

The position determination server 405 can include a database that includes orientation information for various types of mobile wireless devices and/or usage patterns for these devices. This information could be used when determining the compensation factor to apply when estimating the position of the mobile wireless device 420. For example, a user browsing the Internet on a smart phone may typically hold the device out in front of them so that they can see the screen of the device. In contrast, if the user is making a call from the smart phone, the user might typically hold the device up to their ear. Thus, the pattern of occlusion that might occur can be dependent upon usage.

The position determination server 405 can also be configured to determine the orientation and/or the heading of a mobile wireless device by analyzing signal characteristics of signals received at one or more wireless access points 415 from the mobile wireless device 420. The orientation and/or the heading of the device can be determined if the position of the device is determined if the position of the mobile wireless device 420 is known by analyzing the signal characteristics of the signals transmitted between the wireless access points 415 and the mobile wireless device for the effects of user occlusion. The position determination server 405 can be configured to analyze the signal characteristics of signals transmitted between a plurality of wireless access points 415 and the mobile wireless device 420 can estimate the orientation of the mobile wireless device 420 by identifying possible user occlusion based on the signal characteristics.

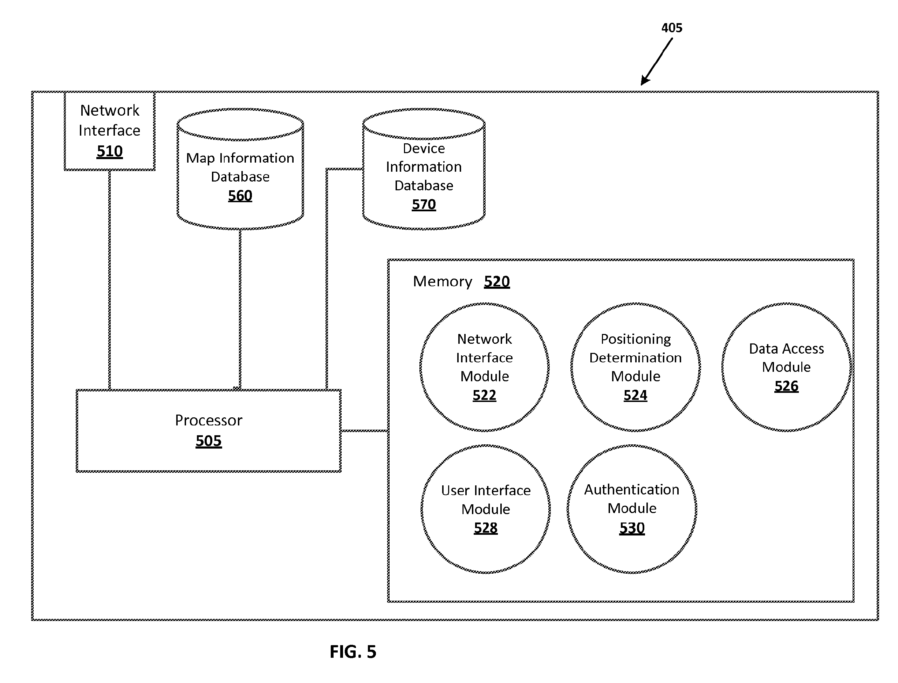

Fig. 5 is a block diagram of a position determination server that can be used to implement the position determination server 405 illustrated in Fig. 4. The position determination server 405 includes a processor 505, a network interface 510, a memory 520, a map information database 560, and a device information database 570.

The processor 505 can comprise one or more microprocessors configured to access memory 520. The processor 505 can read data from and write data to memory 520. The processor 505 can also read executable program code from memory 520 and execute the program code.

The memory 520 includes a network interface module 522, position determination module 524, a data access module 526, and a user interface module 528. The memory 520 can comprise one or more types of tangible, non-transitory computer-readable memory, such as random-access memory (RAM), read-only memory (ROM), flash memory, or a combination thereof. The modules can comprise processor-executable instructions that can be executed by processor 505.

The network interface 510 enables the position determination server 405 to communicate with the wireless access points 415 via network 410 and/or other network-connected devices. The network interface module 522 can send data to and receive data from the wireless access points 415 and/or other devices connected to the network 410. The network interface module 522 can provide data received by the network interface 510 to other modules in memory 520 for processing and can receive data from the other modules to be transmitted to the wireless access points 415 and/or other network-connected devices.

The map information database 560 can be configured to store map information associated with the locations where wireless access points 415 are deployed. For example, the map information database 560 can include information about walls, fixtures, and other elements of the building that can either fully or partially occlude signals transmitted between a mobile wireless device 420 and a wireless access point 415. The map information can be used by the position determination module 524 to narrow down the locations where a mobile wireless device can be located within a building to locations where it is actually possible for a user of the device to be present. For example, the map information can be used to identify where rooms and corridors within a building are located and the position determination server can correlate this information with the signal characteristic information received from one or more wireless access points 415 to help estimate the position of a mobile wireless device 415 within the building. The map information can be used by the position determination module 524 to determine, at least in part, the compensation factor that can be used to help determine an estimated position of the mobile wireless device. For example, a floor map of the building in which the wireless access points are installed can be inspected to identify areas where user occlusion might occur and the possible extent of such occlusion. For example, in corridors multiple paths between a wireless access point and a mobile wireless device do not exist, the effects of user occlusion may be more pronounced. The map information can be combined with the orientation of the mobile wireless device relative to a wireless access point to determine the compensation factor. For example, the RSSI or other signal characteristics of signals transmitted between the mobile wireless device and the wireless access point can be measured and the orientation of the mobile wireless device relative to the wireless access point determined to narrow down the possible locations of the mobile wireless device relative to the wireless access point. The map information can be used to further improve the estimated location of the mobile wireless device by taking into account the location of walls and/or other structures in the building that can occlude the signals transmitted between the mobile wireless device and the wireless access point. The map information can also be used to further improve the accuracy of the estimated position by eliminating portions of the building from consideration where the user of the mobile wireless device could not be located, such as inside of walls or other inaccessible portions of the building.

Returning now to Fig. 5, the device information database 570 can include information about various types of mobile wireless devices. The device information database 570 can include usage pattern information for various types of mobile wireless devices that can include orientation information related to the usage of these mobile wireless devices. For example, a user browsing the Internet on a smart phone may typically hold the device out in front of them so that they can see the screen of the device. In contrast, if the user is making a call from the smart phone, the user might typically hold the device up to their ear. Thus, the pattern of occlusion that might occur can be dependent upon usage.

The position determination server 405 can be configured to receive information identifying the type of mobile wireless device for which an estimated position is being requested. This information can also include the type of usage of the device. For example, the usage information could indicate whether the device is being used to make a call, browse the Internet, play a game, or use another type of application. The usage information could be linked to a user occlusion pattern that would be typical for that particular type of usage. The usage information could be used to determine, in part, a compensation factor to be applied when estimating the position of the mobile wireless device 420.

Position determination module 524 can be configured to estimate a position and/or the heading of a mobile wireless device 420. The position determination module 524 can receive signal characteristics of signals transmitted between one or more wireless access points 415 and a mobile wireless device 420 to estimate the position of the mobile station. The position determination module 524 can also receive orientation information provided by the mobile wireless device 420 via one or more wireless access points 415. The position determination module 524 can use the orientation information when determining the estimated position of the mobile wireless device 420. The position determination module 524 can also be configured to access map information stored in the map information database 560 via the data access module 526. The position determination module 524 can use this map information to narrow down the possible locations of a mobile wireless device 420 when determining the position of the device. The position determination module 524 can also be configured to determine the orientation and/or the heading of a mobile wireless device by analyzing signal characteristics of signals received at one or more wireless access points 415 from the mobile wireless device 420. The orientation and/or the heading of the device can be determined if the position of the mobile wireless device 420 is known by analyzing the signal characteristics of the signals transmitted between the wireless access points 415 and the mobile wireless device for the effects of user occlusion. The position determination module 524 can be configured to determine the heading of a mobile wireless device 420 based on an estimated position of the mobile wireless device 420 and on signal characteristics of signals received at a wireless access point 415 from the mobile wireless device 420. The orientation of the mobile wireless device can be determined based on the signal characteristics and the estimated position of the mobile wireless device 420. An estimated heading can then be determined based on the orientation of the mobile wireless device 420.

The position determination module 524 can be configured to estimate the orientation of the mobile wireless device can also be estimated based on an estimated position of the mobile wireless device and a direction of motion of the mobile wireless device. The position determination module 524 can be configured to implement a trajectory estimation filter that can be used to track the motion and estimated position of the device and using this information the filter can estimate the orientation of the user device. The trajectory estimate filter can be implemented using a particle filter or a Kalman filter.

Data access module 526 can be configured to access data stored in memory 520 and/or in other data stores, such as the map information database 560 or the device information database. The data access module 526 can also be configured to update information stored in the memory 520, map information database 570, or device information database 570.

User interface module 528 can be configured to provide a user interface that allows an administrator to configure the position determination server 405. For example, the user interface module 528 can provide a user interface that accepts login credentials from an administrator and passes the login credentials to the authentication module 530 for authentication. The user interface module 528 can also be configured to provide a user interface that allows an administrator to view, add, modify, and/or delete map information stored in the map information database 560. As described above, the position determination module 524 can use this map information when estimating the position of a mobile wireless device 420.

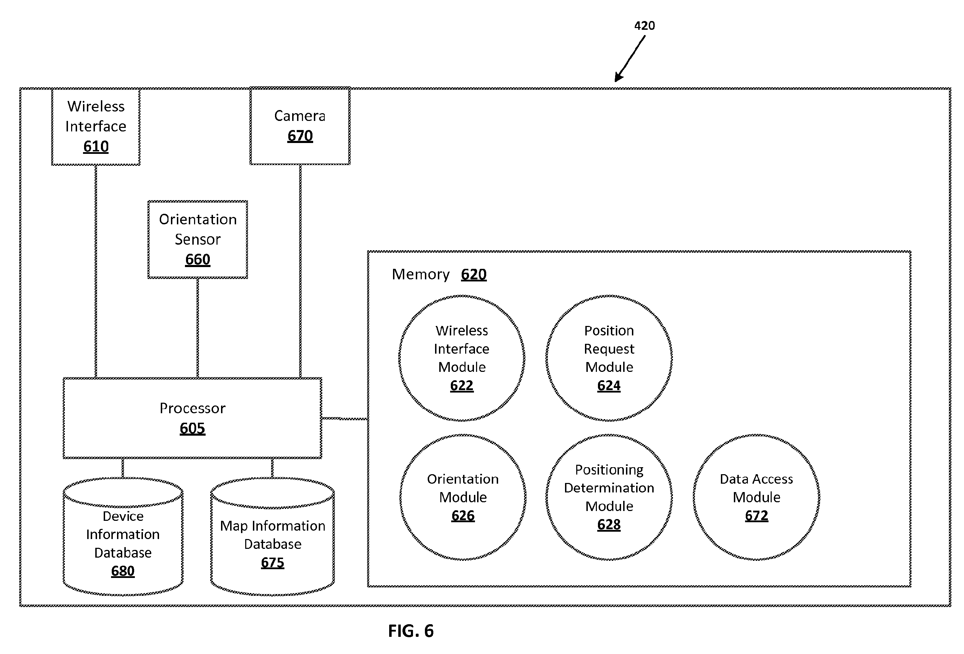

Fig. 6 is a block diagram of a mobile wireless device that can be used to implement the mobile wireless device 420 illustrated in Fig. 4. The mobile wireless device 420 includes a processor 605, a wireless interface 610, a memory 620, an orientation sensor 660, and a camera 670.

The processor 605 can comprise one or more microprocessors configured to access memory 620. The processor 605 can read data from and write data to memory 620. The processor 605 can also read executable program code from memory 620 and execute the program code.

The memory 620 includes a network interface module 522, a position request module 624, and an orientation module 626. The memory 620 can comprise one or more types of tangible, non-transitory computer-readable memory, such as random-access memory (RAM), read-only memory (ROM), flash memory, or a combination thereof. The modules can comprise processor-executable instructions that can be executed by processor 605.

Wireless interface module 622 enables the mobile wireless device 420 to wirelessly communicate with the plurality of wireless access points 415 via wireless interface 610. The wireless interface module 622 can also be configured to enable the mobile wireless device 420 to communicate with base stations of a wireless communication networks. The wireless communications networks can be configured to provide wireless connectivity that can be used to transmit voice and/or data between the mobile wireless device 420 and base stations of the wireless communication networks. The wireless interface 610 can include one or more receivers that allow the mobile wireless device 420 to receive data from the wireless access points 415 and/or one or more wireless communication networks.

Position request module 624 can be configured receive position requests from applications running on the mobile wireless device 420 and/or from other devices. For example, a request for the location of the mobile wireless device 420 could originate from another mobile wireless device 420 or from another device on a wireless communication network. The position request message can be received by the mobile wireless device 420 via wireless access point 415 or via a wireless connect to a base station of a wireless communication network.

The mobile wireless device 420 can include one or more orientation sensors 660. The orientation sensor 660 can comprise an inertial sensor, such as an accelerometer, a gyroscope, and/or a magnetometer. The orientation module 626 can be configured to receive data from the one or more orientation sensors 660 and to determine the orientation of the mobile wireless device 420 based on this information.

The orientation module 626 can also be configured to capture an image or images of the location surrounding the mobile wireless device 420 using camera 670, and these images can be analyzed to estimate the location and/or orientation of the mobile wireless device. For example, the orientation module 626 can be configured to identify landmarks in the images, such as room numbers, name badges on doors, or other landmarks in the building and use that landmarks to estimate the orientation and/or position of the mobile wireless device. The orientation module 626 can also be configured to request information from the position determination server 405 make the position and/or orientation estimates or can be configured to send the images to the position determination server 405 and the position determination server 405 can estimate the location and/or orientation of the device based on the images.

In some implementations, some or all of the logical functions of the position determination server 405 described above can be implemented by the mobile wireless device 420. In such implementations, the mobile wireless device 420 can determine the estimated position of the mobile wireless device and/or the estimated heading of the mobile wireless device without the assistance of a position determination server 405 or with limited assistance of the position determination server 405. For example, in some implementations, the mobile wireless device 420 can include a position determination module 628 that perform similar functions to the position determination module 524 of the position determination server 405. The mobile wireless device 420 can also include a data access module 472, a map information database 675, and a device information database 680.

Position determination module 628 can be configured to estimate a position and/or the heading of the mobile wireless device 420. The position determination module 628 can receive signal characteristics of signals transmitted between one or more wireless access points 415 and a mobile wireless device 420 to estimate the position of the mobile station. The position determination module 628 can also receive orientation information provided by the mobile wireless device 420 via one or more wireless access points 415. The position determination module 628 can use the orientation information when determining the estimated position of the mobile wireless device 420. The position determination module 628 can also be configured to access map information stored in the map information database 675 via the data access module 672. The position determination module 628 can use this map information to narrow down the possible locations of the mobile wireless device 420 when determining the position of the device. The position determination module 628 can also be configured to determine the orientation and/or the heading of the mobile wireless device by analyzing signal characteristics of signals received at one or more wireless access points 415 from the mobile wireless device 420. The orientation and/or the heading of the device can be determined if the position of the mobile wireless device 420 is known by analyzing the signal characteristics of the signals transmitted between the wireless access points 415 and the mobile wireless device for the effects of user occlusion.

The position determination module 628 can be configured to estimate the orientation of the mobile wireless device can also be estimated based on an estimated position of the mobile wireless device and a direction of motion of the mobile wireless device. The position determination module 628 can be configured to implement a trajectory estimation filter that can be used to track the motion and estimated position of the device and using this information the filter can estimate the orientation of the user device. The trajectory estimate filter can be implemented using a particle filter or a Kalman filter. The position determination module 524 can be configured to determine the heading of a mobile wireless device 420 based on an estimated position of the mobile wireless device 420 and on signal characteristics of signals received at a wireless access point 415 from the mobile wireless device 420. The orientation of the mobile wireless device can be determined based on the signal characteristics and the estimated position of the mobile wireless device 420. An estimated heading can then be determined based on the orientation of the mobile wireless device 420.

Data access module 672 can be configured to access data stored in memory 620 and/or in other data stores, such as the map information database 675 or the device information database 680. The data access module 672 can also be configured to update information stored in the memory 620, map information database 675, or device information database 680.

The map information database 675 can be configured to store map information associated with the locations where wireless access points 415 are deployed. For example, the map information database 675 can include information about walls, fixtures, and other elements of the building that can either fully or partially occlude signals transmitted between a mobile wireless device 420 and a wireless access point 415. The map information can be used by the position determination module 628 to narrow down the locations where a mobile wireless device can be located within a building to locations where it is actually possible for a user of the device to be present. For example, the map information can be used to identify where rooms and corridors within a building are located and the position determination server can correlate this information with the signal characteristic information received from one or more wireless access points 415 to help estimate the position of a mobile wireless device 415 within the building. The map information can be used by the position determination module 628 to determine, at least in part, the compensation factor that can be used to help determine an estimated position of the mobile wireless device. For example, a floor map of the building in which the wireless access points are installed can be inspected to identify areas where user occlusion might occur and the possible extent of such occlusion. For example, in corridors multiple paths between a wireless access point and a mobile wireless device do not exist, the effects of user occlusion may be more pronounced. The map information can be combined with the orientation of the mobile wireless device relative to a wireless access point to determine the compensation factor. For example, the RSSI or other signal characteristics of signals transmitted between the mobile wireless device and the wireless access point can be measured and the orientation of the mobile wireless device relative to the wireless access point determined to narrow down the possible locations of the mobile wireless device relative to the wireless access point. The map information can be used to further improve the estimated location of the mobile wireless device by taking into account the location of walls and/or other structures in the building that can occlude the signals transmitted between the mobile wireless device and the wireless access point. The map information can also be used to further improve the accuracy of the estimated position by eliminating portions of the building from consideration where the user of the mobile wireless device could not be located, such as inside of walls or other inaccessible portions of the building.

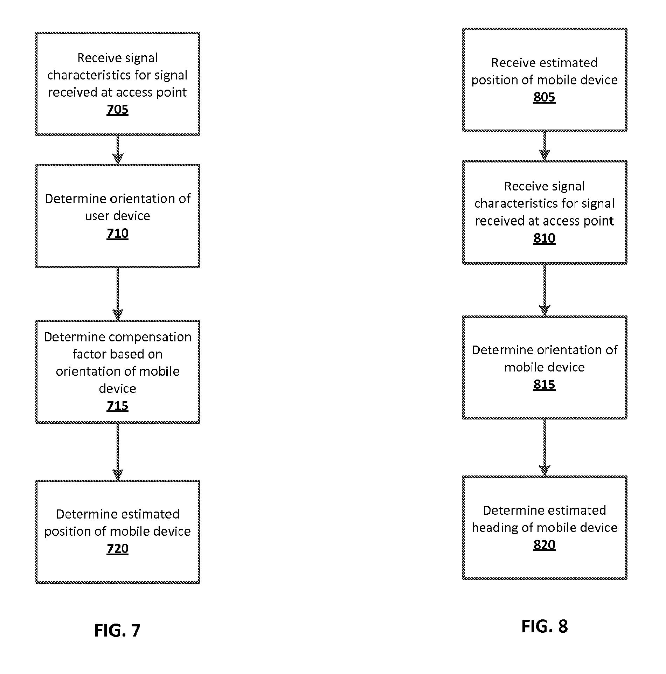

Fig. 7 is a flow diagram of a method for determining the position of a mobile wireless device that can be implemented using the systems illustrated in Figs. 4-6. The method illustrated in Fig. 7 can be implemented in the position determination server 405, the mobile wireless device 420, or a combination thereof.

Signal characteristics of a signal received from the mobile wireless device 420 at a wireless access point 415 of a Wireless Local Area Network (WLAN) are received (stage 705). The wireless access point 415 can be configured to measure signal characteristics of signals transmitted between the wireless access point 415 and the mobile wireless device 420 and to transmit those signal characteristics to the position determination server 405 or to the mobile wireless device 420. In some implementations, the position determination server 405 is configured to determine the position of the mobile wireless device and is configured to receive the signal characteristics of the signals received at the wireless access point 415 from the wireless access point 415. In other implementations, the mobile wireless device 420 is configured to determine the position of the mobile wireless device 420 and is configured to receive the signal characteristics from the wireless access point 415.

The wireless access point 415 can be configured to measure various signal characteristics that can be used by the position determination server 405 to identify whether user occlusion of the signals between the wireless access point 415 and the mobile wireless device 420 has occurred. The wireless access point can be configured measure the RSSI of signals received at the wireless access point 415 from the mobile wireless device 420. The wireless access point can be configured to measure the round-trip time (RTT) for signals traveling between the wireless access point 415 and the mobile wireless device 420. As described above, user occlusion can result in significant drops in RSSI and/or increased RTT for signals transmitted between the wireless access point 415 and the mobile wireless device 420.

The method continues with determining an orientation of the wireless mobile wireless device relative to the wireless access point 415 (stage 710). In implementation where the position determination server 405 is configured to determine the position of the mobile wireless device 420, the mobile wireless device 420 can be configured to provide orientation information to the wireless access point 415 in response to a position request message, and the wireless access point 415 can be configured to provide the information to the position determination server 405. Otherwise, if the mobile wireless device 420 is configured to determine the position of the mobile wireless device 420, the orientation estimated orientation of the mobile wireless device can be determined by the mobile wireless device and provided to the positioning determination module of the mobile wireless device 420. The mobile wireless device 420 can include one or more inertial sensors, such as accelerometers, gyroscopes, and/or magnetometers, and the orientation of the mobile wireless device can be determined based on the sensor data received from these sensors. The mobile wireless device 420 can also be configured to estimate the orientation of the mobile wireless device by capturing images using a camera of the mobile wireless device 420 and identifying landmarks in the images, such as room numbers, names on office doors, or other landmarks within a building. The orientation of the mobile wireless device can also be determined by based on a heading of the mobile wireless device. The heading represents a direction of travel of the mobile wireless device relative to the position of the wireless access point. For example, the user of the mobile wireless device may be walking and carrying the user device causing the mobile wireless device to change positions relative to the wireless access point to which the mobile wireless device is connected.

The orientation of the mobile wireless device can also be estimated based on an estimated position of the mobile wireless device and a direction of motion of the mobile wireless device. A trajectory estimation filter can be used to track the motion and estimated position of the device and using this information the filter can estimate the orientation of the user device. The trajectory estimate filter can be implemented using a particle filter or a Kalman filter.

A compensation factor based on the orientation of the mobile wireless device relative to the wireless access point can then be determined (stage 715). The compensation factor can be used to compensate for user occlusion when determining an estimated position of the mobile wireless device. The compensation factor can be based on the orientation of the mobile wireless device relative to the wireless access point, the compensation factor compensating for the effect of user occlusion on at least one characteristic of the signal received from the mobile wireless device. The compensation factor can compensate for the effects of user occlusion on the one or more measures signal characteristics. In an example, an RSSI value of approximately -55 db might be expected when a particular mobile wireless device oriented in a first orientation is approximately 40 feet from a wireless access point, but if the mobile wireless device is oriented in the opposite direction user occlusion could result in a similar RSSI value being measured at approximately 15 feet. If the effects of user occlusion were not accounted for in the second orientation, the estimated position of the mobile wireless device could be incorrectly estimated by approximately 25 feet. The compensation factor can also be determined, at least in part, using map data that represents the layout of a building in which the wireless access point is located. The map information in combination with the orientation of the mobile wireless device relative to the wireless access point can be used to estimate the impact of user occlusion on the signals transmitted between the wireless access point and the mobile wireless device. The map information can be used to identify structural elements of the building in which the wireless access point is installed that can occlude the signals transmitted between the mobile wireless device and the wireless access point. Depending upon the particular implementation, the position determination server 405 can be configured to determine the compensation factor or the mobile wireless device 420 can be configured to determine the compensation factor.

An estimated position of the mobile wireless device can then be determined using the compensation factor (stage 720). The estimated position of the mobile wireless device can be determined using the map data that represents the layout of a building in which the wireless access point is located. Map information that includes the layout of the building can also be used to improve the estimate of the location of the mobile wireless device by taking into account the location of walls and/or other structures in the building that can occlude the signals transmitted between the mobile wireless device and the wireless access point. The map information can also be used to further improve the accuracy of the estimated position by eliminating portions of the building from consideration where the user of the mobile wireless device could not be located, such as inside of walls or other inaccessible portions of the building. As described above, in some implementations, the estimated position of the mobile wireless device can be determined by the position determination server 405 or by the mobile wireless device 420. In implementations where the mobile wireless device 420 is configured to determine the estimated position of the mobile wireless device, the mobile wireless device can have the locations of the wireless access points 415 accessible at the device. The location information can include map information that represents the layout of the building in which the wireless access points 415 are located. The mobile wireless device can be configured to request the location information from the wireless network when approaching or entering an area where the position of the mobile wireless device may be estimated relative to the position of one or more wireless access points. The mobile wireless device can also be configured to request the location information for the wireless access points at the time that the position of the mobile wireless device is to be estimated if the map location in formation is not already available at the mobile wireless device 420.

Fig. 8 is a flow diagram of a method for determining an estimated heading of a mobile wireless device that can be implemented using the systems illustrated in Figs 4-6. The method illustrated in Fig. 8 can be implemented in the position determination server 405, the mobile wireless device 420, or a combination thereof.

An estimated position of the mobile wireless device 420 can be received (stage 805). In implementations where the position determination server 405 is configured to estimate the heading of the mobile wireless device 420, the position determination server 405 can receive an estimated position of the mobile wireless device from the wireless access point 415. The position determination server 405 can also be configured to estimate the position of the mobile wireless device 420 based on the position of the wireless access point 415 to which the mobile wireless device 420 is connected. Based on the location of the wireless access point 415, the position determination server 405 can estimate that the location of the mobile wireless device 420 falls within a radius surrounding the wireless access point 415. In implementations where mobile wireless device 420 is configured to determine the heading of the mobile wireless device 420, the mobile wireless device 420 can be configured to determine an estimated position of the device based on the signals received from one or more wireless access points 415. The mobile wireless device 420 can also be configured to request the estimated position of the mobile wireless device 420 from a wireless access point 415 and to receive the estimated position of the mobile wireless device 420 from a wireless access point 415.

Signal characteristics of a signal received from mobile wireless device at a wireless access point 415 of a Wireless Local Area Network (WLAN) are received (stage 810). The wireless access point 415 can be configured to measure signal characteristics of signals transmitted between the wireless access point 415 and the mobile wireless device 420 and to transmit those signal characteristics to the position determination server 405 or to the mobile wireless device 420. In some implementations, the position determination server 405 is configured to determine the position of the mobile wireless device and is configured to receive the signal characteristics of the signals received at the wireless access point 415 from the wireless access point 415. In other implementations, the mobile wireless device 420 is configured to determine the position of the mobile wireless device 420 and is configured to receive the signal characteristics from the wireless access point 415.

The wireless access point 415 can be configured to measure various signal characteristics that can be used by the position determination server 405 to identify whether user occlusion of the signals between the wireless access point 415 and the mobile wireless device 420 has occurred. The wireless access point can be configured measure the RSSI of signals received at the wireless access point 415 from the mobile wireless device 420. The wireless access point can be configured to measure the round-trip time (RTT) for signals traveling between the wireless access point 415 and the mobile wireless device 420. As described above, user occlusion can result in significant drops in RSSI and/or increased RTT for signals transmitted between the wireless access point 415 and the mobile wireless device 420.

An estimated orientation of the mobile wireless device 420 can then be determined (stage 815). An estimated orientation of the mobile wireless device 420 can be determined based on the signal characteristics of the signal received at the wireless access point 415 and the position of the mobile wireless device 420. The estimated orientation of the mobile wireless device relative to the wireless access point 415 can be determined based on one or more the various signal indicators described above, such as the RSSI or RTT of the signals. Since the estimated position of the device relative to the wireless access point is known, the orientation of the mobile wireless device 420 can be determined based on the signal characteristics of signals received at the wireless access point 415 from the mobile wireless device 420. The orientation of the device can affect the signal characteristics due to user occlusion of signals between the mobile wireless device 420 and the wireless access point 415.

In implementations where the position determination server 405 is configured to determine the estimated heading of the mobile wireless device, the position determination server 405 can compare the signal characteristics of the mobile wireless device 420 at the estimated position of the mobile wireless device 420 to data correlating signal characteristics at locations throughout a building with various orientations. The position determination server 405 can compare the signal characteristics for the location of the mobile wireless device 420 to the stored information to derive an estimated orientation for the mobile wireless device 420. In implementations where the mobile wireless device 420 is configured to determine the estimated heading of the mobile wireless device 420, the mobile wireless device can compare the signal characteristics of the mobile wireless device 420 at the estimated position of the mobile wireless device 420 to data correlating signal characteristics at locations throughout a building with various orientations. The mobile wireless device 420 can compare the signal characteristics for the location of the mobile wireless device 420 to the stored information to derive an estimated orientation for the mobile wireless device 420.

An estimated heading of mobile wireless device can be determined (stage 820). An estimated heading (direction of travel) of the mobile wireless device 420 can be determined based on the orientation of the mobile wireless device 420 relative to the wireless access point 415. In some implementations, the position determination server 405 is used to determine the estimated heading of the mobile wireless device, while in other implementations, the mobile wireless device 420 is configured to determine the estimated heading of the mobile wireless device 420. Previously obtained position information for the mobile wireless device 420 representing a track followed by the mobile wireless device when can also be used when determining the current heading for the mobile wireless device 420. The estimated heading of the mobile wireless device 420 can be useful for coordinating handoffs between wireless access points 415 and for providing directional information to the mobile wireless device 420. For example, an indoor navigational application could be provided to the mobile wireless device that provides turn by turn directions for navigating the building. The estimated heading of the mobile wireless device can also be used to generate navigational directions for the mobile wireless device 420.

The mobile wireless device 420 can also be configured to implement the method illustrated in Fig. 8 without the assistance of the position determination server 405. For example, the mobile wireless device 420 can be configured to include data representing a map of the building and a mapping of estimated signal characteristics for various orientations of the mobile wireless device 420 at different locations throughout the building that the mobile wireless device 420 can use to derive and estimated heading for the mobile wireless device.

The various illustrative logical blocks, modules, and algorithm stages described may be implemented as electronic hardware, computer software, or combinations of both. To clearly illustrate this interchangeability of hardware and software, various illustrative components, blocks, modules, and stages have been described above generally in terms of their functionality. Whether such functionality is implemented as hardware or software depends upon the design constraints imposed on the overall system. The described functionality can be implemented in varying ways. In addition, the grouping of functions within a module, block or stage is for ease of description. Specific functions can be moved from one module or block without departing from the disclosure.

The various illustrative logical blocks and modules described can be implemented or performed with a general purpose processor, a digital signal processor (DSP), application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, multiple microprocessors, one or more microprocessors in conjunction with a DSP core, or any other such configuration.

The operations of a method or algorithm described may be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium. An exemplary storage medium can be coupled to the processor such that the processor can read information from, and write information to, the storage medium. In the alternative, the storage medium can be integral to the processor. The processor and the storage medium can reside in an ASIC.

Various changes and modifications could be made to the descriptions provided above without departing from the scope of the disclosure or the appended claims. For example, although elements may be described or claimed in the singular, the plural may be included. Additionally, all or portions of aspects and/or embodiments may be utilized with other aspects and/or embodiments

As used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C). A wireless communication network does not have all communications transmitted wirelessly, but is configured to have at least some communications transmitted wirelessly.

Other examples and implementations are within the scope and spirit of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C), or combinations with more than one feature (e.g., AA, AAB, ABBC, etc.).

Further, more than one invention may be disclosed.

### CLAUSES

1. A method for determining a position of a mobile wireless device, the method comprising:
   receiving signal characteristics of a signal received from the mobile wireless device at a wireless access point of a Wireless Local Area Network (WLAN);
   determining an orientation of the mobile wireless device relative to the wireless access point;
   determining a compensation factor based on the orientation of the mobile wireless device relative to the wireless access point, the compensation factor compensating for an effect of user occlusion on at least one characteristic of the signal received from the mobile wireless device; and
   determining an estimated position of the mobile wireless device based at least in part on the compensation factor.
2. The method of clause 1 wherein determining the compensation factor includes determining the compensation factor using map data that represents a layout of a building in which the wireless access point is located.
3. The method of clause 1 wherein determining the estimated position of the mobile wireless device includes determining the estimated position of the mobile wireless device based at least in part on the compensation factor and map data that represents a layout of a building in which the wireless access point is located.
4. The method of clause 1 wherein determining the orientation of the mobile wireless device further comprises:
   sending a position request to the mobile wireless device in which the mobile wireless device is instructed to capture an image of an area surrounding the mobile wireless device;
   receiving the image of the area surrounding the mobile wireless device;
   identifying landmarks in the image received from the mobile wireless device; and
   determining the orientation of the mobile wireless device based on landmarks in the image captured by the mobile wireless device.
5. The method of clause 1 wherein determining the orientation of the mobile wireless device further comprises:
   receiving data representing the orientation of the mobile wireless device based on sensor data collected by the mobile wireless device; and
      determining the orientation of the mobile wireless device using information received from an inertial sensor.
6. The method of clause 5 wherein the sensor data comprises sensor data collected from the inertial sensor.
7. The method of clause 5 wherein the sensor data comprises sensor data collected from a magnetometer.
8. The method of clause 1 wherein determining the orientation of the mobile wireless device relative to the wireless access point further comprises:
   determining a heading of the mobile wireless device;
   determining the orientation of the mobile wireless device based on the heading.
9. The method of clause 8 wherein determining a heading of the mobile wireless device includes determining the heading using the estimated position of the mobile wireless device and a direction of motion of the mobile wireless device
10. The method of clause 9 wherein determining the heading of the mobile wireless device includes determining the heading of the mobile wireless device using a trajectory estimation filter configured to track an estimate of the direction of motion of the mobile wireless device.
11. The method of clause 10 wherein the trajectory estimation filter is a particle filter.
12. The method of clause 10 wherein the trajectory estimation filter is a Kalman filter.
13. The method of clause 1, further comprising:
   deriving a set of compensation values based on an expected extent of occlusion to be experienced by the mobile wireless device at a plurality of positions on a map; and wherein determining the estimated position of the mobile wireless device based at least in part on the compensation factor and map data further comprises comparing the compensation factor to the map data to determine an estimated location of the mobile wireless device.
14. The method of clause 1 wherein the compensation factor is associated with a Received Signal Strength Indication (RSSI) value associated with the signal received from the mobile wireless device.
15. The method of clause 14 wherein determining the estimated position of the mobile wireless device includes determining a compensated RSSI value for the mobile wireless device based on an RSSI value associated with the signal transmitted between the mobile wireless device and the wireless access point and the compensation factor.
16. The method of clause 15 wherein determining the estimated position of the mobile wireless device includes determining the estimated position of the mobile wireless device by comparing the compensated RSSI value with estimated RSSI values associated for the wireless access point derived from map data.
17. The method of clause 1 wherein the compensation factor is associated with a round- trip time (RTT) value associated with the signal received from the mobile wireless device.
18. The method of clause 17 wherein determining the estimated position of the mobile wireless device includes determining a compensated RTT value for the mobile wireless device based on an RTT value associated with the signal transmitted between the mobile wireless device and the wireless access point and the compensation factor.
19. The method of clause 18 wherein determining the estimated position of the mobile wireless device includes determining the estimated position of the mobile wireless device by comparing the compensated RTT value with estimated RTT values associated for the wireless access point derived from map data.
20. A tangible computer-readable medium, having stored thereon computer-readable instructions for determining a position of a mobile wireless device, comprising instructions configured to cause a computer to:
   receive signal characteristics of a signal received from the mobile wireless device at a wireless access point of a Wireless Local Area Network (WLAN); determine an orientation of the mobile wireless device relative to the wireless access point;
   determine a compensation factor based on the orientation of the mobile wireless device relative to the wireless access point, the compensation factor compensating for an effect of user occlusion on at least one characteristic of the signal received from the mobile wireless device; and
   determine an estimated position of the mobile wireless device based at least in part on the compensation factor.
21. The medium of clause 20 wherein the instructions that cause the computer to determine the compensation factor include instructions that cause the computer to determine the compensation factor using map data that represents a layout of a building in which the wireless access point is located.
22. The medium of clause 20 wherein the instructions that cause the computer to determine the estimated position of the mobile wireless device includes instructions that cause the computer to determine the estimated position of the mobile wireless device based at least in part on the compensation factor and map data that represents a layout of a building in which the wireless access point is located.
23. The medium of clause 20 wherein the instructions that cause the computer to determine the orientation of the mobile wireless device further comprise instructions that cause a computer to:
   send a position request to the mobile wireless device in which the mobile wireless device is instructed to capture an image of an area surrounding the mobile wireless device;
   receive the image of the area surrounding the mobile wireless device;
   identify landmarks in the image received from the mobile wireless device; and determine the orientation of the mobile wireless device based on landmarks in the image captured by the mobile wireless device.
24. The medium of clause 20 wherein the instructions that cause the computer to determine the orientation of the mobile wireless device further comprise instructions that cause a computer to: receive data representing the orientation of the mobile wireless device based on sensor data collected by the mobile wireless device; and
   determine the orientation of the mobile wireless device using information received from an inertial sensor.
25. The medium of clause 24 wherein the sensor data comprises sensor data collected from the inertial sensor.
26. The medium of clause 24 wherein the sensor data comprises sensor data collected from a magnetometer.
27. The medium of clause 20 wherein the instructions that cause the computer to determine the orientation of the mobile wireless device relative to the wireless access point further comprise instructions that cause a computer to:
   determine a heading of the mobile wireless device; and
   determine the orientation of the mobile wireless device based on the heading.
28. The medium of clause 27 wherein the instructions that cause the computer to determine a heading of the mobile wireless device include instructions that cause the computer to determine the heading using the estimated position of the mobile wireless device and a direction of motion of the mobile wireless device.
29. The medium of clause 28 wherein the instructions that cause the computer to determine the heading of the mobile wireless device include instructions that cause the computer to determine the heading of the mobile wireless device using a trajectory estimation filter configured to track an estimate of the direction of motion of the mobile wireless device.
30. The medium of clause 29 wherein the trajectory estimation filter is a particle filter.
31. The medium of clause 29 wherein the trajectory estimation filter is a Kalman filter.
32. The medium of clause 20, further comprising instructions that cause a computer to: derive a set of compensation values based on an expected extent of occlusion to be experienced by the mobile wireless device at a plurality of positions on a map; and wherein the instructions that cause the computer to determine the estimated position of the mobile wireless device based at least in part on the compensation factor and map data further comprises instructions that cause the computer to compare the compensation factor to the map data to determine an estimated location of the mobile wireless device.
33. The medium of clause 20 wherein the compensation factor is associated with a Received Signal Strength Indication (RSSI) value associated with the signal received from the mobile wireless device.
34. The medium of clause 33 wherein the instructions that cause the computer to determine the estimated position of the mobile wireless device include instructions that cause the computer to determine a compensated RSSI value for the mobile wireless device based on an RSSI value associated with the signal transmitted between the mobile wireless device and the wireless access point and the compensation factor.
35. The medium of clause 34 wherein the instructions that cause the computer to determine the estimated position of the mobile wireless device include instructions that cause the computer to determine the estimated position of the mobile wireless device by comparing the compensated RSSI value with estimated RSSI values associated for the wireless access point derived from map data.
36. The medium of clause 20 wherein the compensation factor is associated with a round-trip time (RTT) value associated with the signal received from the mobile wireless device.
37. The medium of clause 36 wherein the instructions that cause the computer to determine the estimated position of the mobile wireless device includes instructions that cause the computer to determine a compensated RTT value for the mobile wireless device based on an RTT value associated with the signal transmitted between the mobile wireless device and the wireless access point and the compensation factor.
38. The medium of clause 37 wherein the instructions that cause the computer to determine the estimated position of the mobile wireless device include instructions that cause the computer to determine the estimated position of the mobile wireless device by comparing the compensated RTT value with estimated RTT values associated for the wireless access point derived from map data.
39. An apparatus for determining a position of a mobile wireless device comprising:
   means for receiving signal characteristics of a signal received from the mobile wireless device at a wireless access point of a Wireless Local Area Network (WLAN);
   means for determining an orientation of the mobile wireless device relative to the wireless access point;
   means for determining a compensation factor based on the orientation of the mobile wireless device relative to the wireless access point, the compensation factor compensating for an effect of user occlusion on at least one characteristic of the signal received from the mobile wireless device; and
   means for determining an estimated position of the mobile wireless device based at least in part on the compensation factor.
40. The apparatus of clause 39 wherein the means for determining the compensation factor includes means for determining the compensation factor using map data that represents a layout of a building in which the wireless access point is located.
41. The apparatus of clause 39 wherein the means for determining the estimated position of the mobile wireless device includes means for determining the estimated position of the mobile wireless device based at least in part on the compensation factor and map data that represents a layout of a building in which the wireless access point is located.
42. The apparatus of clause 39 wherein the means for determining the orientation of the mobile wireless device further comprises:
   means for sending a position request to the mobile wireless device in which the mobile wireless device is instructed to capture an image of an area surrounding the mobile wireless device;
   means for receiving the image of the area surrounding the mobile wireless device;
   means for identifying landmarks in the image received from the mobile wireless device; and
   means for determining the orientation of the mobile wireless device based on landmarks in the image captured by the mobile wireless device.
43. The apparatus of clause 39 wherein the means for determining the orientation of the mobile wireless device further comprises: means for receiving data representing the orientation of the mobile wireless device based on sensor data collected by the mobile wireless device; and
   means for determining the orientation of the mobile wireless device using information received from an inertial sensor.
44. The apparatus of clause 43 wherein the sensor data comprises sensor data collected from the inertial sensor.
45. The apparatus of clause 43 wherein the sensor data comprises sensor data collected from a magnetometer.
46. The apparatus of clause 39 wherein the means for determining the orientation of the mobile wireless device relative to the wireless access point further comprises:
   means for determining a heading of the mobile wireless device; and
   means for determining the orientation of the mobile wireless device based on the heading.
47. The apparatus of clause 46 wherein the means for determining a heading of the mobile wireless device includes means for determining the heading using the estimated position of the mobile wireless device and a direction of motion of the mobile wireless device.
48. The apparatus of clause 47 wherein the means for determining the heading of the mobile wireless device includes means for determining the heading of the mobile wireless device using a trajectory estimation filter configured to track an estimate of the direction of motion of the mobile wireless device.
49. The apparatus of clause 48 wherein the trajectory estimation filter is a particle filter.
50. The apparatus of clause 48 wherein the trajectory estimation filter is a Kalman filter.
51. The apparatus of clause 39, further comprising:
   means for deriving a set of compensation values based on an expected extent of occlusion to be experienced by the mobile wireless device at a plurality of positions on a map; and
   wherein the means for determining the estimated position of the mobile wireless device based at least in part on the compensation factor and map data further comprises means for comparing the compensation factor to the map data to determine an estimated location of the mobile wireless device.
52. The apparatus of clause 39 wherein the compensation factor is associated with a Received Signal Strength Indication (RSSI) value associated with the signal received from the mobile wireless device.
53. The apparatus of clause 52 wherein the means for determining the estimated position of the mobile wireless device include means for determining a compensated RSSI value for the mobile wireless device based on an RSSI value associated with the signal received from the mobile wireless device and the compensation factor.
54. The apparatus of clause 53 wherein the means for determining the estimated position of the mobile wireless device include means for determining the estimated position of the mobile wireless device by comparing the compensated RSSI value with estimated RSSI values associated for the wireless access point derived from map data.
55. The apparatus of clause 39 wherein the compensation factor is associated with a round-trip time (RTT) value associated with the signal received from the mobile wireless device.
56. The apparatus of clause 55 wherein the means for determining the estimated position of the mobile wireless device includes means for determining a compensated RTT value for the mobile wireless device based on an RTT value associated with the signal transmitted between the mobile wireless device and the wireless access point and the compensation factor.
57. The apparatus of clause 56 wherein the means for determining the estimated position of the mobile wireless device include means for determining the estimated position of the mobile wireless device by comparing the compensated RTT value with estimated RTT values associated for the wireless access point derived from map data.
58. An apparatus for determining a position of a mobile wireless device comprising: a tangible, non-transitory computer-readable memory;
   a plurality of modules comprising processor executable code stored in the memory; a processor connected to the memory and configured to access the plurality of modules stored in the memory; and
   a position determination module configured to
   receive signal characteristics of a signal received from the mobile wireless device at a wireless access point of a Wireless Local Area Network (WLAN);
   determine an orientation of the mobile wireless device relative to the wireless access point;
   determine a compensation factor based on the orientation of the mobile wireless device relative to the wireless access point, the compensation factor compensating for an effect of user occlusion on at least one characteristic of the signal received from the mobile wireless device; and
   determine an estimated position of the mobile wireless device based at least in part on the compensation factor.
59. The apparatus of clause 58 wherein the position determination module is configured to determine the compensation factor using map data that represents a layout of a building in which the wireless access point is located.
60. The apparatus of clause 58 wherein the position determination module is configured to determine the estimated position of the mobile wireless device based at least in part on the compensation factor and map data that represents a layout of a building in which the wireless access point is located.
61. The apparatus of clause 58 wherein the position determination module is configured to:
   send a position request to the mobile wireless device in which the mobile wireless device is instructed to capture an image of an area surrounding the mobile wireless device;
   receive the image of the area surrounding the mobile wireless device;
   identify landmarks in the image received from the mobile wireless device; and determine the orientation of the mobile wireless device based on landmarks in the image captured by the mobile wireless device.
62. The apparatus of clause 58 wherein the position determination module is configured to: receive data representing the orientation of the mobile wireless device based on sensor data collected by the mobile wireless device; and
   determine the orientation of the mobile wireless device using information received from an inertial sensor.
63. The apparatus of clause 62 wherein the sensor data comprises sensor data collected from the inertial sensor.
64. The apparatus of clause 62 wherein the sensor data comprises sensor data collected from a magnetometer.
65. The apparatus of clause 58 wherein the position determination module is configured to:
   determine a heading of the mobile wireless device; and
   determine the orientation of the mobile wireless device based on the heading.
66. The apparatus of clause 65 wherein the position determination module is configured to determine the heading using the estimated position of the mobile wireless device and a direction of motion of the mobile wireless device.
67. The apparatus of clause 66 wherein the position determination module is configured to determine the heading of the mobile wireless device using a trajectory estimation filter configured to track an estimate of the direction of motion of the mobile wireless device.
68. The apparatus of clause 67 wherein the trajectory estimation filter is a particle filter.
69. The apparatus of clause 67 wherein the trajectory estimation filter is a Kalman filter.
70. The apparatus of clause 58 wherein the position determination module is configured to:
   derive a set of compensation values based on an expected extent of occlusion to be experienced by the mobile wireless device at a plurality of positions on a map; and wherein the position determination module being configured to determine the estimated position of the mobile wireless device based at least in part on the
   compensation factor and map data is further configured to compare the compensation factor to the map data to determine an estimated location of the mobile wireless device.
71. The apparatus of clause 70 wherein the compensation factor is associated with a Received Signal Strength Indication (RSSI) value associated with the signal received from the mobile wireless device.
72. The apparatus of clause 71 wherein the position determination module being configured to determine the estimated position of the mobile wireless device is further configured to determine a compensated RSSI value for the mobile wireless device based on an RSSI value associated with the signal transmitted between the mobile wireless device and the wireless access point and the compensation factor.
73. The apparatus of clause 72 wherein the position determination module is further configured to determine the estimated position of the mobile wireless device by comparing the compensated RSSI value with estimated RSSI values associated for the wireless access point derived from the map data.
74. The apparatus of clause 58 wherein the compensation factor is associated with a round-trip time (RTT) value associated with the signal received from the mobile wireless device.
75. The apparatus of clause 74 wherein the position determination module being configured to determine the estimated position of the mobile wireless device is further configured to determine a compensated RTT value for the mobile wireless device based on an RTT value associated with the signal transmitted between the mobile wireless device and the wireless access point and the compensation factor.
76. The apparatus of clause 75 wherein the position determination module being configured to determine the estimated position of the mobile wireless device is further configured to determine the estimated position of the mobile wireless device by comparing the compensated RTT value with estimated RTT values associated for the wireless access point derived from map data.
77. A method for estimating the heading of a mobile wireless device comprising:
   receiving an estimated position for the mobile wireless device;
   receiving signal characteristics of a signal received from the mobile wireless device at a wireless access point of a Wireless Local Area Network (WLAN);
   determining an orientation of the mobile wireless device based on the estimated position of the mobile wireless device and the received signal characteristics; and
   determining a heading of the mobile wireless device based on the estimated position of the mobile wireless device and the orientation of the mobile wireless device.
78. The method of clause 77 wherein determining the orientation of the mobile wireless device based on the estimated position of the mobile wireless device and the received signal characteristics include determining the orientation of the mobile wireless device based at least in part on a Received Signal Strength Indication (RSSI) value associated with the signal received from the mobile wireless device.
79. The method of clause 77 wherein determining the orientation of the mobile wireless device based on the estimated position of the mobile wireless device and the received signal characteristics include determining the orientation of the mobile wireless device based at least in part on a round-trip time (RTT) value associated with the signal received from the mobile wireless device.
80. The method of clause 77 wherein determining the orientation of the mobile wireless device based on the estimated position of the mobile wireless device and the received signal characteristics include comparing the received signal characteristics and the estimated position of the mobile wireless device to data mapping signal characteristics associated with positions and orientations in a building to derive an estimated orientation of the mobile wireless device.
81. An apparatus for estimating the heading of a mobile wireless device comprising:
   means for receiving an estimated position for the mobile wireless device;
   means for receiving signal characteristics of a signal received from the mobile wireless device at a wireless access point of a Wireless Local Area Network (WLAN);
   means for determining an orientation of the mobile wireless device based on the estimated position of the mobile wireless device and the received signal characteristics; and
   means for determining a heading of the mobile wireless device based on the estimated position of the mobile wireless device and the orientation of the mobile wireless device.
82. The apparatus of clause 81 wherein the means determining the orientation of the mobile wireless device based on the estimated position of the mobile wireless device and the received signal characteristics include means for determining the orientation of the mobile wireless device based at least in part on a Received Signal Strength Indication (RSSI) value associated with the signal received from the mobile wireless device.
83. The apparatus of clause 81 wherein the means for determining the orientation of the mobile wireless device based on the estimated position of the mobile wireless device and the received signal characteristics include means for determining the orientation of the mobile wireless device based at least in part on a round-trip time (RTT) value associated with the signal received from the mobile wireless device.
84. The apparatus of clause 81 wherein the means for determining the orientation of the mobile wireless device based on the estimated position of the mobile wireless device and the received signal characteristics include means for comparing the received signal characteristics and the estimated position of the mobile wireless device to data mapping signal characteristics associated with positions and orientations in a building to derive an estimated orientation of the mobile wireless device.
85. An apparatus for estimating the heading of a mobile wireless device comprising: a tangible, non-transitory computer-readable memory;
   a plurality of modules comprising processor executable code stored in the memory;
   a processor connected to the memory and configured to access the plurality of modules stored in the memory; and
   a position determination module configured to
   receive an estimated position for the mobile wireless device; receive signal characteristics of a signal received from the mobile wireless device at a wireless access point of a Wireless Local Area Network (WLAN);
   determine an orientation of the mobile wireless device based on the estimated position of the mobile wireless device and the received signal characteristics; and
   determine a heading of the mobile wireless device based on the estimated position of the mobile wireless device and the orientation of the mobile wireless device.
86. The apparatus of clause 85 wherein the position determination module being configured to determine the orientation of the mobile wireless device based on the estimated position of the mobile wireless device and the received signal characteristics is configured to determine the orientation of the mobile wireless device based at least in part on a Received Signal Strength Indication (RSSI) value associated with the signal received from the mobile wireless device.
87. The apparatus of clause 85 wherein the position determination module being configured to determine the orientation of the mobile wireless device based on the estimated position of the mobile wireless device and the received signal characteristics is configured to determine the orientation of the mobile wireless device based at least in part on a round-trip time (RTT) value associated with the signal received from the mobile wireless device.
88. The apparatus of clause 85 wherein the position determination module being configured to determine the orientation of the mobile wireless device based on the estimated position of the mobile wireless device and the received signal characteristics is configured to compare the received signal characteristics and the estimated position of the mobile wireless device to data mapping signal characteristics associated with positions and orientations in a building to derive an estimated orientation of the mobile wireless device.
89. A tangible computer-readable medium, having stored thereon computer-readable instructions for estimating the heading of a mobile wireless device, comprising instructions configured to cause a computer to:
   receive an estimated position for the mobile wireless device;
   receive signal characteristics of a signal received from the mobile wireless device at a wireless access point of a Wireless Local Area Network (WLAN);
   determine an orientation of the mobile wireless device based on the estimated position of the mobile wireless device and the received signal characteristics; and
   determine a heading of the mobile wireless device based on the estimated position of the mobile wireless device and the orientation of the mobile wireless device.
90. The medium of clause 89 wherein the code configured to cause the computer to determine the orientation of the mobile wireless device based on the estimated position of the mobile wireless device and the received signal characteristics include code configured to cause the computer to determine the orientation of the mobile wireless device based at least in part on a Received Signal Strength Indication (RSSI) value associated with the signal received from the mobile wireless device.
91. The medium of clause 89 wherein the code configured to cause the computer to determine the orientation of the mobile wireless device based on the estimated position of the mobile wireless device and the received signal characteristics include code configured to cause the computer to determine the orientation of the mobile wireless device based at least in part on a round-trip time (RTT) value associated with the signal received from the mobile wireless device.
92. The medium of clause 89 wherein the code configured to cause the computer to determine the orientation of the mobile wireless device based on the estimated position of the mobile wireless device and the received signal characteristics include code configured to cause the computer to compare the received signal characteristics and the estimated position of the mobile wireless device to data mapping signal characteristics associated with positions and orientations in a building to derive an estimated orientation of the mobile wireless device.

## Claims

1. A method for estimating the heading of a mobile wireless device comprising:
receiving an estimated position for the mobile wireless device;
receiving signal characteristics of a signal received from the mobile wireless device at a wireless access point of a Wireless Local Area Network (WLAN);
determining an orientation of the mobile wireless device based on the estimated position of the mobile wireless device and the received signal characteristics; and
determining a heading of the mobile wireless device based on the estimated position of the mobile wireless device and the orientation of the mobile wireless device.

2. The method of claim 1 wherein determining the orientation of the mobile wireless device based on the estimated position of the mobile wireless device and the received signal characteristics include determining the orientation of the mobile wireless device based at least in part on a Received Signal Strength Indication (RSSI) value associated with the signal received from the mobile wireless device.

3. The method according to any one of the preceding claims, wherein determining the orientation of the mobile wireless device based on the estimated position of the mobile wireless device and the received signal characteristics include determining the orientation of the mobile wireless device based at least in part on a round-trip time (RTT) value associated with the signal received from the mobile wireless device.

4. The method according to any one of the preceding claims, wherein determining the orientation of the mobile wireless device based on the estimated position of the mobile wireless device and the received signal characteristics include comparing the received signal characteristics and the estimated position of the mobile wireless device to data mapping signal characteristics associated with positions and orientations in a building to derive an estimated orientation of the mobile wireless device.

5. An apparatus for estimating the heading of a mobile wireless device comprising:
means for receiving an estimated position for the mobile wireless device;
means for receiving signal characteristics of a signal received from the mobile wireless device at a wireless access point of a Wireless Local Area Network (WLAN);
means for determining an orientation of the mobile wireless device based on the estimated position of the mobile wireless device and the received signal characteristics; and
means for determining a heading of the mobile wireless device based on the estimated position of the mobile wireless device and the orientation of the mobile wireless device.

6. The apparatus of claim 5 wherein the means determining the orientation of the mobile wireless device based on the estimated position of the mobile wireless device and the received signal characteristics include means for determining the orientation of the mobile wireless device based at least in part on a Received Signal Strength Indication (RSSI) value associated with the signal received from the mobile wireless device.

7. The apparatus according to any one of claims 5 or 6, wherein the means for determining the orientation of the mobile wireless device based on the estimated position of the mobile wireless device and the received signal characteristics include means for determining the orientation of the mobile wireless device based at least in part on a round-trip time (RTT) value associated with the signal received from the mobile wireless device.

8. The apparatus according to any one of claims 5 to 7, wherein the means for determining the orientation of the mobile wireless device based on the estimated position of the mobile wireless device and the received signal characteristics include means for comparing the received signal characteristics and the estimated position of the mobile wireless device to data mapping signal characteristics associated with positions and orientations in a building to derive an estimated orientation of the mobile wireless device.

9. A tangible computer-readable medium, having stored thereon computer-readable instructions for estimating the heading of a mobile wireless device, comprising instructions configured to cause a computer to:
receive an estimated position for the mobile wireless device;
receive signal characteristics of a signal received from the mobile wireless device at a wireless access point of a Wireless Local Area Network (WLAN);
determine an orientation of the mobile wireless device based on the estimated position of the mobile wireless device and the received signal characteristics; and
determine a heading of the mobile wireless device based on the estimated position of the mobile wireless device and the orientation of the mobile wireless device.

10. The medium of claim 9 wherein the code configured to cause the computer to determine the orientation of the mobile wireless device based on the estimated position of the mobile wireless device and the received signal characteristics include code configured to cause the computer to determine the orientation of the mobile wireless device based at least in part on a Received Signal Strength Indication (RSSI) value associated with the signal received from the mobile wireless device.

11. The medium according to any one of claims 9 or 10, wherein the code configured to cause the computer to determine the orientation of the mobile wireless device based on the estimated position of the mobile wireless device and the received signal characteristics include code configured to cause the computer to determine the orientation of the mobile wireless device based at least in part on a round-trip time (RTT) value associated with the signal received from the mobile wireless device.

12. The medium according to any one of claims 9 to 11, wherein the code configured to cause the computer to determine the orientation of the mobile wireless device based on the estimated position of the mobile wireless device and the received signal characteristics include code configured to cause the computer to compare the received signal characteristics and the estimated position of the mobile wireless device to data mapping signal characteristics associated with positions and orientations in a building to derive an estimated orientation of the mobile wireless device.
